(19) Europäisches Patentamt
European Patent Office
Office européen des brevets

(11) **EP 4 242 961 B1**

(12) **EUROPEAN PATENT SPECIFICATION**

(45) Date of publication and mention
of the grant of the patent:
**30.07.2025 Bulletin 2025/31**

(21) Application number: **22826975.9**

(22) Date of filing: **21.01.2022**

(51) International Patent Classification (IPC):
**G06T 5/50** (2006.01)    **G06T 5/60** (2024.01)
**G06T 7/40** (2017.01)    **G06T 7/11** (2017.01)
**G06T 7/187** (2017.01)

(52) Cooperative Patent Classification (CPC):
**G06T 5/50; G06T 5/60; G06T 7/11; G06T 7/187;**
G06T 2207/20084; G06T 2207/20221

(86) International application number:
**PCT/CN2022/073190**

(87) International publication number:
**WO 2022/267466 (29.12.2022 Gazette 2022/52)**

(54) **IMAGE PROCESSING METHOD AND APPARATUS, AND ELECTRONIC DEVICE**

BILDVERARBEITUNGSVERFAHREN UND -VORRICHTUNG SOWIE ELEKTRONISCHE VORRICHTUNG

PROCÉDÉ ET APPAREIL DE TRAITEMENT D'IMAGE, ET DISPOSITIF ÉLECTRONIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.06.2021 CN 202110707978**

(43) Date of publication of application:
**13.09.2023 Bulletin 2023/37**

(73) Proprietor: **Honor Device Co., Ltd.**
**Shenzhen, Guangdong 518040 (CN)**

(72) Inventors:
• **DING, Dajun**
**Shenzhen, Guangdong 518040 (CN)**
• **QIAO, Xiaolei**
**Shenzhen, Guangdong 518040 (CN)**
• **XIAO, Bin**
**Shenzhen, Guangdong 518040 (CN)**
• **ZHU, Congchao**
**Shenzhen, Guangdong 518040 (CN)**

(74) Representative: **Gill Jennings & Every LLP**
**The Broadgate Tower**
**20 Primrose Street**
**London EC2A 2ES (GB)**

(56) References cited:
CN-A- 107 087 107    CN-A- 108 401 104
CN-A- 111 147 755    CN-A- 112 819 738
CN-A- 113 570 617    CN-A- 113 592 751
JP-A- 2020 009 099    US-A1- 2018 352 165

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

This application claims priority to Chinese Patent Application No. 202110707978.1, filed with the China National Intellectual Property Administration on June 24, 2021 and entitled "IMAGE PROCESSING METHOD AND APPARATUS, AND ELECTRONIC DEVICE".

**TECHNICAL FIELD**

This application belongs to the image processing field, and in particular, to an image processing method and apparatus, and an electronic device.

**BACKGROUND**

With the widespread use of electronic devices, using an electronic device to take a photo has become a daily behavior in people's lives. For example, the electronic device is a mobile phone. In the conventional technology, to improve photographing quality, it is proposed in the industry to dispose dual cameras on the mobile phone, and image information is complemented by using a difference between image information obtained by the two cameras, thereby improving quality of a photographed image.

However, in practice, when a mobile phone provided with dual cameras photographs an image, images obtained by the two cameras are only simply fused, and this manner cannot be used to photograph images of high quality in all scenes.

For example, a mobile phone is provided with two cameras, where one camera is a main camera and the other camera is a wide-angle camera or a long-focus camera. A field of view of the wide-angle camera is large than a field of view of the main camera and is suitable for close-range photographing. A field of view of the long-focus camera is smaller than the field of view of the main camera and is suitable for long-range photographing. In this case, if an image photographed by the main camera and an image photographed by the wide-angle camera or the long-focus camera are simply fused, because the fields of view of the two cameras do not match, a fused image may have a poor stereoscopic property and poor quality.

For example, two images obtained by using such a mobile phone with dual cameras have a part in which fields of view overlap and a part in which fields of view do not overlap. If the two images are fused directly, in a finally photographed image, the part in which the fields of view overlap has a high definition and the part in which the fields of view do not overlap has a low definition. As a result, the photographed image may have a problem of definition inconsistency between a central part and a peripheral part, that is, a fusion boundary may appear on the image, which affects an imaging effect.

Therefore, a new image processing method is in urgent need to effectively improve a definition of an obtained image. Patent application CN108401104 discloses a bifocal camera digital zooming method based on band repair and super-resolution.

**SUMMARY**

This application provides an image processing method and apparatus, and an electronic device, to add texture information in a small field-of-view image to a large field-of-view image to enhance details, thereby improving a definition of the large field-of-view image.

To achieve the foregoing objective, the following technical solutions are used in this application:

According to an embodiment of the invention, an image processing method is provided according to claim 1.

This embodiment provides an image processing method in which a plurality of frames of original images are obtained, a small field-of-view image in the plurality of frames of original images is segmented to obtain at least one corresponding first image block, and a large field-of-view image in the plurality of frames of original images is segmented to obtain at least one corresponding second image block. Because a field of view corresponding to the large field-of-view image includes a field of view corresponding to the small field-of-view image, the at least one first image block and the at least one second image block that are obtained after segmentation have a mapping relationship. Based on this, texture information is further extracted from one or more first image blocks and added to a second image block having a mapping relationship with the first image block from which the texture information is extracted. The small field-of-view image has a higher definition and richer details than the large field-of-view image. Therefore, when the texture information extracted from the first image block is added to the second image block, details of the second image block can be enhanced, thereby improving a definition and quality of the large field-of-view image.

According to another embodiment of the invention, an image processing method is provided according to claim 4.

In a further embodiment of the present invention, before the extracting texture information from the first image block, and adding the extracted texture information to a target image block, the method further includes: pasting the small field-of-view image into a first region in the large field-of-view image. The first region is a region that is in the large field-of-view image and that corresponds to the small field-of-view image, a second region is a region other than the first region in the large field-of-view image, and the target image block is the second image block that is located in the second region and that has a mapping relationship with the at least one first image block, and a sub-image block in the second image block having a mapping relationship with the at least one first image block, where the sub-image block is located in the second region. In this implementation, the small field-of-view image has a higher definition than the large field-of-view image, and when the small field-of-view image is pasted into the first region in the large field-of-view image, a definition of the first region in the large field-of-view image is improved as a whole. Therefore, subsequently, the texture information extracted from the first image block needs to be added to only the second image block located in the second region and the sub-image block that is in the second image block and that is located in the second region, so that a calculation amount can be reduced and processing efficiency can be improved.

In a further embodiment of the present invention, before the pasting the small field-of-view image into a first region in the large field-of-view image, the method further includes: determining, by using a watershed algorithm, a connected domain corresponding to the at least one second image block. After the pasting the small field-of-view image into a first region in the large field-of-view image, the method further includes: determining whether the at least one first image block is connected to a connected domain corresponding to the target image block; if the at least one first image block is connected to the connected domain corresponding to the target image block, determining an image entropy of the at least one first image block; determining, based on the image entropy of the at least one first image block, a manner of adding the texture information extracted from the at least one first image block to the target image block; and adding the extracted texture information to the target image block in the determined adding manner. In this implementation, whether the first image block is connected to the connected domain corresponding to the target image block may be determined to improve accuracy of subsequent addition of the texture information, and the texture information in the first image block is added to only the target image block in the connected domain.

In a further embodiment of the present invention, when semantic segmentation is performed on both the small field-of-view image and the large field-of-view image by using the deep learning network model, the method further includes: determining a similarity or a peak signal to noise ratio between the at least one first image block and the target image block; when the similarity or the peak signal to noise ratio meets a preset threshold corresponding to the similarity or the peak signal to noise ratio, determining an image entropy of the at least one first image block; determining, based on the image entropy of the at least one first image block, a manner of adding the texture information extracted from the at least one first image block to the target image block; and adding the extracted texture information to the target image block in the determined adding manner. In this implementation, the first image block and the target image block that have a stronger correlation may be selected based on the similarity or the peak signal to noise ratio. Based on this, the image entropy may be determined to know whether the first image block has more or less detail information. Therefore, different manners of adding the texture information to the target image block may be determined based on different image entropies.

In a further embodiment of the present invention, the method further includes: if the at least one first image block is not connected to the connected domain corresponding to the target image block, determining a similarity or a peak signal to noise ratio between the at least one first image block and the target image block; when the similarity or the peak signal to noise ratio meets a preset threshold corresponding to the similarity or the peak signal to noise ratio, determining an image entropy of the at least one first image block; determining, based on the image entropy of the at least one first image block, a manner of adding the texture information extracted from the at least one first image block to the target image block; and adding the extracted texture information to the target image block in the determined adding manner. In this implementation, although the first image block is not connected to the connected domain corresponding to the target image block, it is possible that the first image block is the same object as the target image block. Therefore, the similarity may be further determined to determine whether to add the texture information.

In a further embodiment of the present invention, the determining, based on the image entropy of the at least one first image block, a manner of adding the texture information extracted from the at least one first image block to the target image block includes: when the image entropy of the at least one first image block is less than an image entropy threshold, the manner of adding the texture information extracted from the at least one first image block to the target image block is an explicit adding manner; and when the image entropy of the at least one first image block is greater than or equal to the image entropy threshold, the manner of adding the texture information extracted from the at least one first image block to the target image block is an implicit adding manner. The adding manner includes the explicit adding manner and the implicit adding manner, the explicit adding manner is used to indicate that the texture information is not changed when the texture information is added, and the implicit adding manner is used to indicate that the texture information is adaptively varied when the texture information is added. In this implementation, when the image entropy of the first image block is less than the image entropy threshold, it indicates that there is less detail information in the first image block. In this case, the texture information may be directly copied and pasted into the target image block in the explicit adding manner, so that a calculation amount is small and efficiency is high. However, when the image entropy of the first image block is greater than or equal to the image entropy threshold, it indicates that there is more detail information in the first image block. In this case, the implicit adding manner needs to be used to adaptively vary the texture information extracted from the first image block and then add the texture information to the target image block, so that content in the original target image block and the texture information are fused more naturally and image details are increased, thereby improving a visual effect.

In a further embodiment of the present invention, the deep learning network model is any one of FCN, SegNet, and DeepLab.

According to a further embodiment of the present invention, an image processing apparatus is provided. The apparatus includes a unit configured to perform the steps of any of the methods mentioned above.

According to a further embodiment of the present invention, an image processing apparatus is provided, including a receiving interface and a processor. The receiving interface is configured to obtain a plurality of frames of original images from an electronic device, where the plurality of frames of original images are images photographed for a same to-be-photographed scene, the plurality of frames of original images include a small field-of-view image and a large field-of-view image, and a field of view corresponding to the large field-of-view image includes a field of view corresponding to the small field-of-view image. The processor is configured to invoke a computer program stored in a memory to perform the steps performed in the image processing method provided in the first aspect or any possible implementation of the first aspect.

According to a further embodiment of the present invention, an electronic device is provided, including a camera module, a processor, and a memory. The camera module is configured to obtain a plurality of frames of original images, where the plurality of frames of original images are images photographed for a same to-be-photographed scene, the plurality of frames of original images include a small field-of-view image and a large field-of-view image, and a field of view corresponding to the large field-of-view image includes a field of view corresponding to the small field-of-view image. The memory is configured to store a computer program that can run on the processor. The processor is configured to perform the steps of any of the methods mentioned above.

In a further embodiment of the present invention, the camera module includes a first camera and a second camera. The first camera is configured to photograph the to-be-photographed scene at a first field of view, and the second camera is configured to photograph the to-be-photographed scene at a second field of view, where the first field of view is smaller than the second field of view. The first camera is configured to obtain the small field-of-view image after the processor obtains a photographing instruction, where the field of view corresponding to the small field-of-view image is the first field of view. The second camera is configured to obtain the large field-of-view image after the processor obtains the photographing instruction, where the field of view corresponding to the large field-of-view image is the second field of view.

According to a fifth aspect, a chip is provided, including a processor, configured to invoke a computer program from a memory and run the computer program, so that a device installed with the chip performs the image processing method provided in the first aspect or any possible implementation of the first aspect.

According to a further embodiment of the present invention, a computer-readable storage medium is provided. The computer-readable storage medium stores a computer program, the computer program includes program instructions, and when the program instructions are executed by a processor, the processor is enabled to perform the steps of any of the methods mentioned above.

According to a further embodiment of the present invention, a computer program product is provided. The computer program product includes a computer-readable storage medium storing a computer program, and the computer program enables a computer to perform the steps of any of the methods mentioned above.

According to the image processing method and apparatus, and the electronic device provided in this application, a plurality of frames of original images are obtained, a small field-of-view image in the plurality of frames of original images is segmented to obtain at least one corresponding first image block, and a large field-of-view image in the plurality of frames of original images is segmented to obtain at least one corresponding second image block. Because a field of view corresponding to the large field-of-view image includes a field of view corresponding to the small field-of-view image, the at least one first image block and the at least one second image block that are obtained after segmentation have a mapping relationship. Based on this, texture information is further extracted from one or more first image blocks and added to a second image block having a mapping relationship with the first image block from which the texture information is extracted. The small field-of-view image has a higher definition and richer details than the large field-of-view image. Therefore, when the texture information extracted from the first image block is added to the second image block, details of the second image block can be enhanced, thereby improving a definition and quality of the large field-of-view image.

BRIEF DESCRIPTION OF DRAWINGS

FIG. 1 is a schematic diagram of processing images photographed by dual cameras in the conventional technology;
FIG. 2 is a schematic diagram of a structure of an electronic device according to an embodiment of this application;
FIG. 3 is a diagram of a hardware architecture of an image processing apparatus according to an embodiment of this application;

FIG. 4 is a schematic flowchart of an image processing method according to an embodiment of this application;

FIG. 5 is a schematic flowchart of another image processing method according to an embodiment of this application;

FIG. 6 is a schematic diagram of a manner of adding texture information according to an embodiment of this application;

FIG. 7 is a schematic flowchart of still another image processing method according to an embodiment of this application;

FIG. 8 is a schematic diagram of determining a connected domain corresponding to a second image block according to an embodiment of this application;

FIG. 9 is a schematic flowchart of still another image processing method according to an embodiment of this application;

FIG. 10 is a schematic flowchart of still another image processing method according to an embodiment of this application;

FIG. 11 is a schematic flowchart of still another image processing method according to an embodiment of this application;

FIG. 12 is a schematic flowchart of still another image processing method according to an embodiment of this application;

FIG. 13A and FIG. 13B are a schematic flowchart of still another image processing method according to an embodiment of this application;

FIG. 14A and FIG. 14B are a schematic flowchart of still another image processing method according to an embodiment of this application;

FIG. 15 is a schematic diagram of a structure of an image processing apparatus according to an embodiment of this application; and

FIG. 16 is a schematic diagram of a structure of a chip according to an embodiment of this application.

## DESCRIPTION OF EMBODIMENTS

The following describes the technical solutions in this application with reference to the accompanying drawings.

In the descriptions of the embodiments of this application, unless otherwise stated, "/" means "or", for example, A/B may represent A or B. In this specification, "and/or" is merely an association relationship for describing associated objects and represents that three relationships may exist. For example, A and/or B may represent the following three cases: only A exists, both A and B exist, and only B exists. In addition, in the descriptions of the embodiments of this application, "a plurality of" refers to two or more than two.

The terms "first" and "second" mentioned below are merely used for the purpose of description, and shall not be construed as an indication or implication of relative importance or an implication of a quantity of indicated technical features. Therefore, a feature limited by "first" or "second" may explicitly or implicitly include one or more features. In the descriptions of the embodiments, unless otherwise stated, "a plurality of" means two or more.

First, some terms in the embodiments of this application are described for ease of understanding by a person skilled in the art.

1. Field of view (field of view, FOV): The field of view is used to indicate a maximum angle range in which a camera can perform photographing. If a to-be-photographed object falls within this angle range, the to-be-photographed object can be captured by the camera; or if the to-be-photographed object is beyond this angle range, the to-be-photographed object cannot be captured by the camera.

Generally, a larger field of view of the camera indicates a larger photographing range and a shorter focal length, and a smaller field of view of the camera indicates a smaller photographing range and a longer focal length. Therefore, cameras can be divided into a main camera, a wide-angle camera, and a long-focus camera due to different fields of view. The wide-angle camera has a larger field of view and a shorter focal length than the main camera and is suitable for close-range photographing. However, the long-focus camera has a smaller field of view and a longer focal length than the main camera and is suitable for long-range photographing.

2. Connected domain: The connected domain means that if the interior of any simple closed curve in a region A belongs to A, A is referred to as the connected domain, or the connected domain may be expressed as that a region enclosed by any closed curve in A includes only points in A.

3. Watershed algorithm (Watershed algorithm): The watershed algorithm is a topological theory-based segmentation method in mathematical morphology, and is also a common image segmentation method. A basic idea of the watershed algorithm is to consider an image as a topological geomorphological condition in geodesy. A grayscale value of a pixel at each point in the image represents an altitude at the point, and recessed locations in the image are local minimums in the image. A catchment basin is a region affected by the recessed locations in the terrain, and is also a region surrounding the local minimums. Through water injection, the recessed locations are submerged during rise of a water surface, eventually forming dams around the recessed locations. The dams are used to prevent water in other catchment basins from mixing into basins of the recessed locations. When all the catchment basins in the terrain are surrounded by the dams, water injection is stopped. In this case, the dams are watersheds.

The foregoing briefly describes the terms in the embodiments of this application, and details are not described below again.

With the widespread use of electronic devices, using the electronic device to take a photo has become a daily behavior in people's lives. A mobile phone is used as an example. In the conventional technology, to improve photographing quality, it is proposed in the industry to dispose dual cameras on the mobile phone, and image information is complemented by using a difference between image information obtained by the two cameras, thereby improving quality of a photographed image.

However, in practice, when a mobile phone provided with dual cameras photographs an image, images obtained by the two cameras are only simply fused, and this manner cannot be used to photograph images of high quality in all scenes.

For example, a mobile phone is provided with two cameras, where one camera is a main camera and the other camera is a wide-angle camera or a long-focus camera, or the two cameras are respectively a wide-angle camera and a long-focus camera. A field of view of the wide-angle camera is larger than a field of view of the main camera, and a field of view of the long-focus camera is smaller than the field of view of the main camera. Then, an image photographed by the main camera and an image photographed by the wide-angle camera, or the image photographed by the main camera and an image photographed by the long-focus camera are simply fused; or the image photographed by the wide-angle camera and the image photographed by the long-focus camera are simply fused.

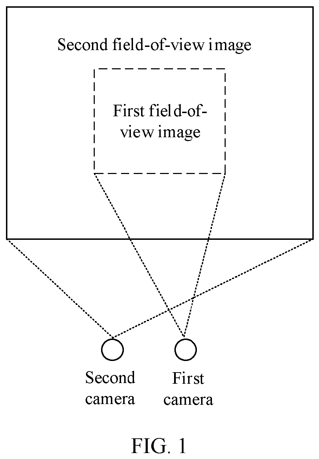

FIG. 1 is a schematic diagram of processing images photographed by dual cameras in the conventional technology.

As shown in FIG. 1, in the conventional technology, based on a value of a field of view, a first field-of-view image photographed by a main camera is usually filled into a second field-of-view image photographed by a wide-angle camera, or a first field-of-view image photographed by a long-focus camera is filled into a second field-of-view image photographed by a main camera or a wide-angle camera. However, in this manner, because fields of view of the two cameras do not match, a fused image has a poor stereoscopic property and poor quality.

For example, two images obtained by using such a mobile phone with dual cameras have a part in which fields of view overlap and a part in which fields of view do not overlap. If the two images are fused directly, in a finally photographed image, the part in which the fields of view overlap may not be aligned with the part in which the fields of view do not overlap. As a result, some content is fractured or deformed. In addition, the part in which the fields of view overlap may have a high definition and the part in which the fields of view do not overlap may have a low definition. As a result, the photographed image may have a problem of definition inconsistency between a central part and a peripheral part, that is, a fusion boundary may appear on the image, which affects an imaging effect.

In view of this, the embodiments of this application provide an image processing method. For a small field-of-view image and a large field-of-view image that have a field-of-view overlapping part, texture information in the small field-of-view image is added to the large field-of-view image to enhance details, thereby improving a definition of the large field-of-view image.

The image processing method provided in the embodiments of this application is applicable to various electronic devices, and correspondingly, the image processing apparatus provided in the embodiments of this application may be electronic devices of various forms.

In some embodiments of this application, the electronic device may be various photographing apparatuses such as a single-lens reflex camera and a cube camera, a mobile phone, a tablet computer, a wearable device, an in-vehicle device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or the like; or may be another device or apparatus that can perform image processing. A specific type of the electronic device is not limited in the embodiments of this application.

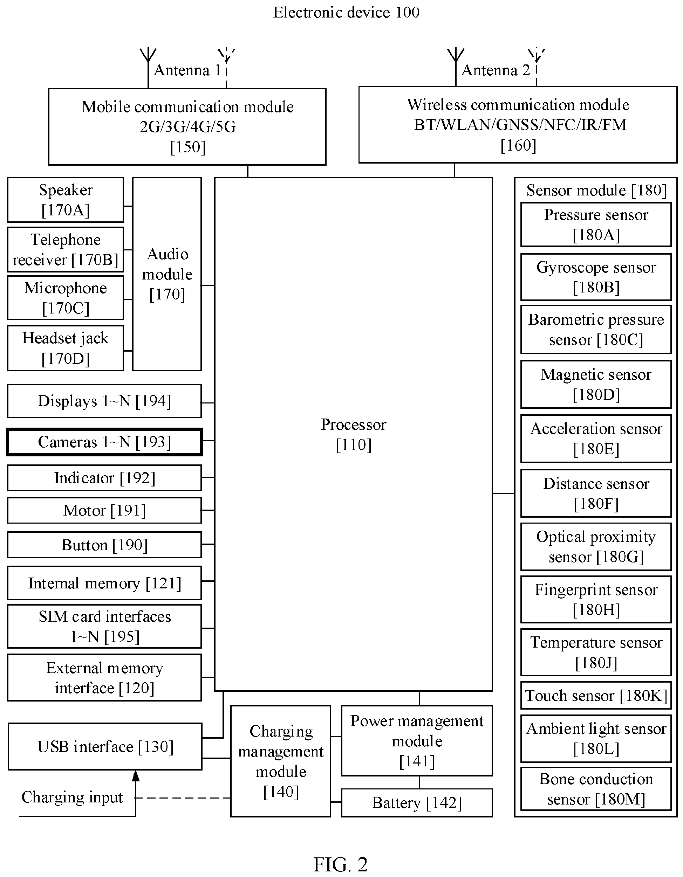

The following uses an example in which the electronic device is a mobile phone. FIG. 2 is a schematic diagram of a structure of an electronic device 100 according to an embodiment of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a telephone receiver 170B, a microphone 170C, a headset jack 170D, a sensor module 180, a button 190, a motor 191, an indicator 192, a camera 193, a display 194, and a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, and complete control of instruction fetching and instruction execution.

A memory may be further disposed in the processor 110, and is configured to store instructions and data. In some embodiments, the memory in the processor 110 is a cache. The memory may store instructions or data that is just used or cyclically used by the processor 110. If the processor 110 needs to use the instructions or the data again, the processor 110 may directly invoke the instructions or the data from the memory, to avoid repeated access and reduce waiting time of the processor 110, thereby improving system efficiency.

The processor 110 may run software code of the image processing method provided in the embodiments of this application, to photograph an image with a high definition.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The MIPI interface may be configured to connect the processor 110 to peripheral components such as the display 194 and the camera 193. The MIPI interface include a camera serial interface (camera serial interface, CSI), a display serial interface (display serial interface, DSI), and the like. In some embodiments, the processor 110 and the camera 193 communicate with each other by using the CSI interface, to implement a photographing function of the electronic device 100. The processor 110 and the display 194 communicate with each other by using the DSI interface, to implement a display function of the electronic device 100.

The GPIO interface may be configured by using software. The GPIO interface may be configured as a control signal or may be configured as a data signal. In some embodiments, the GPIO interface may be configured to connect the processor 110 to the camera 193, the display 194, the wireless communication module 160, the audio module 170, the sensor module 180, and the like. The GPIO interface may alternatively be configured as the I2C interface, the I2S interface, the UART interface, the MIPI interface, or the like.

The USB interface 130 is an interface that complies with the USB standard specification, and may be specifically a Mini USB interface, a Micro USB interface, a USB Type C interface, and the like. The USB interface 130 may be configured to connect to a charger to charge the electronic device 100, or may be configured to transmit data between the electronic device 100 and a peripheral device. The USB interface 130 may alternatively be configured to connect to a headset to play audio through the headset. The interface may alternatively be configured to connect to another electronic device, for example, an AR device.

It may be understood that an interface connection relationship between the modules that is shown in this embodiment of this application is merely an example for description, and constitutes no limitation on the structure of the electronic device 100. In some other embodiments of this application, the electronic device 100 may use an interface connection manner different from that in the foregoing embodiment, or use a combination of a plurality of interface connection manners.

The charging management module 140 is configured to receive a charging input from a charger.

The power management module 141 is configured to connect the battery 142 and the charging management module 140 to the processor 110. The power management module 141 receives an input of the battery 142 and/or an input of the charging management module 140, to supply power to the processor 110, the internal memory 121, the display 194, the camera 193, the wireless communication module 160, and the like.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed to improve antenna utilization. For example, the antenna 1 may be multiplexed as a diversity antenna of a wireless local area network. In some other embodiments, the antenna may be used in combination with a tuning switch.

The mobile communication module 150 may provide a solution for wireless communication including 2G/3G/4G/5G and the like applied to the electronic device 100. The mobile communication module 150 may include at least one filter, a switch, a power amplifier, a low noise amplifier (LNA), and the like. The mobile communication module 150 may receive an electromagnetic wave through the antenna 1, perform processing such as filtering and amplification on the received electromagnetic wave, and send a processed electromagnetic wave to the modem processor for demodulation. The mobile communication module 150 may further amplify a signal modulated by the modem processor, and convert the signal into an electromagnetic wave through the antenna 1 for radiation. In some embodiments, at least some functional modules in the mobile communication module 150 may be disposed in the processor 110. In some embodiments, at least some functional modules in the mobile communication module 150 may be disposed in a same component as at least some modules in the processor 110.

The wireless communication module 160 may provide a solution for wireless communication including a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like applied to the electronic device 100. The wireless communication module 160 may be one or more components integrating at least one communication processing module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave through the antenna 2 for radiation.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display 194, the application processor, and the like. The GPU is a microprocessor for image processing and is connected to the display 194 and the application processor. The GPU is configured to perform mathematical and geometric calculations and render an image. The processor 110 may include one or more GPUs that execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light emitting diode or an active-matrix organic light emitting diode (active-matrix organic light emitting diode, AMOLED), a flex light-emitting diode (flex light-emitting diode, FLED), a Miniled, a MicroLed, a Micro-oLed, a quantum dot light emitting diode (quantum dot light emitting diodes, QLED), or the like. In some embodiments, the electronic device 100 may include one or N displays 194, where N is a positive integer greater than 1.

The camera 193 is configured to capture an image, and may be started through triggering by using an application program instruction, to implement a photographing function, for example, photographing and obtaining an image of any scene. The camera may include parts such as an imaging lens, a light filter, and an image sensor. Light emitted or reflected by an object enters the imaging lens, passes through the light filter, and finally converges on the image sensor. The image sensor is mainly configured to converge and image light emitted or reflected by all objects in a photographing field of view (which may also be referred to as a to-be-photographed scene or a target scene, or may be understood as a scene image that a user expects to photograph). The light filter is mainly configured to filter out excessive optical waves (for example, optical waves other than visible light, such as infrared) in the light. The image sensor is mainly configured to perform photoelectric conversion on a received optical signal, convert the optical signal to convert the optical signal into an electrical signal, and input the electrical signal to the processor 130 for subsequent processing. The camera 193 may be located at the front of the electronic device 100, or may be located at the back of the electronic device 100. A specific quantity and arrangement manner of cameras may be set based on a requirement, which are not limited in this application.

For example, the electronic device 100 includes a front-facing camera and a rear-facing camera. For example, the front-facing camera or the rear-facing camera may each include one or more cameras. For example, the electronic device 100 has three rear-facing cameras. In this way, when the electronic device 100 starts the three rear-facing cameras to perform photographing, the image processing method provided in the embodiments of this application can be used. Alternatively, the camera is disposed on an external part of the electronic device 100. The external part is rotatably connected to a frame of the mobile phone, and an angle formed between the external part and the display 194 of the electronic device 100 is any angle between 0 degrees and 360 degrees. For example, when the electronic device 100 is in self-photographing, the externally disposed part drives the camera to rotate to a location toward the user. Certainly, when the mobile phone has a plurality of cameras, only some of the cameras may be disposed on the external part, and the remaining cameras may be disposed on a body of the electronic device 100. This is not limited in this embodiment of this application.

The internal memory 121 may be configured to store computer-executable program code. The executable program code includes instructions. The internal memory 121 may include a program storage region and a data storage region. The program storage region may store an operating system, an application program required by at least one function (for example, a sound playing function or an image playing function), and the like. The data storage region may store data (such as audio data and a phone book) and the like created during use of the electronic device 100. In addition, the internal memory 121 may include a high-speed random access memory, and may further include a nonvolatile memory, for example, at least one disk storage device, a flash memory, or a universal flash storage (universal flash storage, UFS). The processor 110 runs the instructions stored in the internal memory 121 and/or the instructions stored in the memory disposed in the processor, to perform various function applications and data processing of the electronic device 100.

The internal memory 121 may further store the software code of the image processing method provided in the embodiments of this application. When the processor 110 runs the software code, steps in a procedure of the image processing method are executed to obtain an image with a high definition.

The internal memory 121 may further store a photographed image.

The external memory interface 120 may be configured to connect to an external storage card, for example, a Micro SD card, to expand a storage capacity of the electronic device 100. The external storage card communicates with the processor 110 through the external memory interface 120, to implement a data storage function, for example, files such as music are stored in the external storage card.

Certainly, the software code of the image processing method provided in the embodiments of this application may be stored in an external memory, and the processor 110 may run the software code through the external memory interface 120 to execute the steps in the procedure of the image processing method to obtain an image with a high definition. An image photographed by the electronic device 100 may also be stored in the external memory.

It should be understood that the user may specify whether the image is stored in the internal memory 121 or the external memory. For example, when the electronic device 100 is currently connected to the external memory, if the electronic device 100 photograph one frame of image, prompt information may be popped up to prompt the user whether to store the image in the external memory or the internal memory. Certainly, there may be other manners for specifying, which are not limited in this embodiment of this application. Alternatively, when the electronic device 100 detects that a memory amount of the internal memory 121 is less than a preset amount, the image may be automatically stored in the external memory.

The electronic device 100 may implement an audio function, for example, music playing or recording, by using the audio module 170, the speaker 170A, the telephone receiver 170B, the microphone 170C, the headset jack 170D, the application, and the like.

The pressure sensor 180A is configured to sense a pressure signal, and can convert the pressure signal into an electrical signal. In some embodiments, the pressure sensor 180A may be disposed on the display 194.

The gyroscope sensor 180B may be configured to determine a movement posture of the electronic device 100. In some embodiments, angular velocities of the electronic device 100 around three axes (that is, an x axis, a y axis, and a z axis) may be determined by using the gyroscope sensor 180B. The gyroscope sensor 180B may be configured to implement image stabilization during photographing.

The barometric pressure sensor 180C is configured to measure barometric pressure. In some embodiments, the electronic device 100 calculates an altitude by using a barometric pressure value measured by the barometric pressure sensor 180C, to assist positioning and navigation.

The magnetic sensor 180D includes a Hall effect sensor. The electronic device 100 may detect opening/closing of a flip leather case by using the magnetic sensor 180D. In some embodiments, when the electronic device 100 is a flip phone, the electronic device 100 may detect opening/closing of a flip cover by using the magnetic sensor 180D, to set features, such as automatic unlocking through flipping, based on a detected opening/closing state of the leather case or opening/closing state of the flip cover.

The acceleration sensor 180E may detect accelerations of the electronic device 100 in all directions (generally in three axes), and may detect a magnitude and a direction of gravity when the electronic device 100 is still. The acceleration sensor 180E may be further configured to identify a posture of the electronic device, and is applied to applications such as switching between a landscape mode and a portrait mode and a pedometer.

The distance sensor 180F is configured to measure a distance. The electronic device 100 may measure a distance in an infrared manner or a laser manner. In some embodiments, in a photographing scenario, the electronic device 100 may measure a distance by using the distance sensor 180F, to implement quick focusing.

The optical proximity sensor 180G may include, for example, a light-emitting diode (LED) and an optical detector such as a photodiode. The light-emitting diode may be an infrared light-emitting diode. The electronic device 100 emits infrared light to the outside by using the light-emitting diode. The electronic device 100 detects infrared reflected light from a nearby object by using the photodiode. When detecting sufficient reflected light, the electronic device 100 may determine that there is an object near the electronic device 100; or when detecting insufficient reflected light, the electronic device 100 may determine that there is no object near the electronic device 100. The electronic device 100 may detect, by using the optical proximity sensor 180G, that a user holds the electronic device 100 close to an ear for a call, to implement automatic screen-off to save power. The optical proximity sensor 180G may alternatively be used in a leather case mode or a pocket mode to automatically unlock or lock a screen.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may further cooperate with the optical proximity sensor 180G to detect whether the electronic device 100 is in a pocket to prevent an accidental touch.

The fingerprint sensor 180H is configured to collect a fingerprint. The electronic device 100 may implement fingerprint unlock, application lock accessing, fingerprint-based photographing, fingerprint-based call answering, and the like by using a feature of the collected fingerprint.

The temperature sensor 180J is configured to detect a temperature. In some embodiments, the electronic device 100 executes a temperature processing policy by using the temperature detected by the temperature sensor 180J. For example, when a temperature reported by the temperature sensor 180J exceeds a threshold, the electronic device 100 reduces performance of a processor near the temperature sensor 180J, to reduce power consumption to implement thermal protection. In some other embodiments, when the temperature is lower than another threshold, the electronic device 100 heats the battery 142, to prevent the electronic device 100 from being abnormally powered off due to a low temperature. In some other embodiments, when the temperature is lower than still another threshold, the electronic device 100 boosts an output voltage of the battery 142, to avoid abnormal power-off caused by a low temperature.

The touch sensor 180K is also referred as a "touch component". The touch sensor 180K may be disposed on the display 194. The touch sensor 180K and the display 194 form a touchscreen, which is also referred to as "touch screen". The touch sensor 180K is configured to detect a touch operation performed on or near the touch sensor 180K. The touch sensor may transfer the detected touch operation to the application processor to determine a touch event type, and may provide, by using the display 194, a visual output related to the touch operation. In some other embodiments, the touch sensor 180K may be alternatively disposed on a surface of the electronic device 100, and is at a location different from that of the display 194.

The bone conduction sensor 180M may obtain a vibration signal. In some embodiments, the bone conduction sensor 180M may obtain a vibration signal of a vibration bone in human vocal-cord part. The bone conduction sensor 180M may also be in contact with a human pulse to receive a blood pressure beating signal. In some embodiments, the bone conduction sensor 180M may alternatively be disposed in a headset, to form a bone conduction headset in combination with the headset. The audio module 170 may obtain a speech signal through parsing based on the vibration signal that is of the vibration bone in the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power on/off button, a volume button, and the like. The button 190 may be a mechanical button, or may be a touch button. The electronic device 100 may receive a key input, and generate a key signal input related to user settings and function control of the electronic device 100.

The motor 191 may generate a vibration prompt. The motor 191 may be configured to provide a vibration prompt for an incoming call, and may also be configured to provide a vibration feedback for a touch. For example, touch operations performed on different applications (such as photographing and audio playing) may correspond to different vibration feedback effects.

The indicator 192 may be an indicator light, and may be configured to indicate a charging status or a power change, and may also be configured to indicate a message, a missed call, a notification, and the like.

The SIM card interface 195 is configured to connect to a SIM card. The SIM card may be inserted into the SIM card interface 195 or pulled out of the SIM card interface 195 to achieve contact with or separation from the electronic device 100.

It may be understood that the structure illustrated in this embodiment of this application does not constitute a specific limitation on the electronic device 100. In some other embodiments of this application, the electronic device 100 may include more or fewer components than those shown in the figure, combine some components, split some components, or have different component arrangements. The components in the figure may be implemented by hardware, software, or a combination of software and hardware.

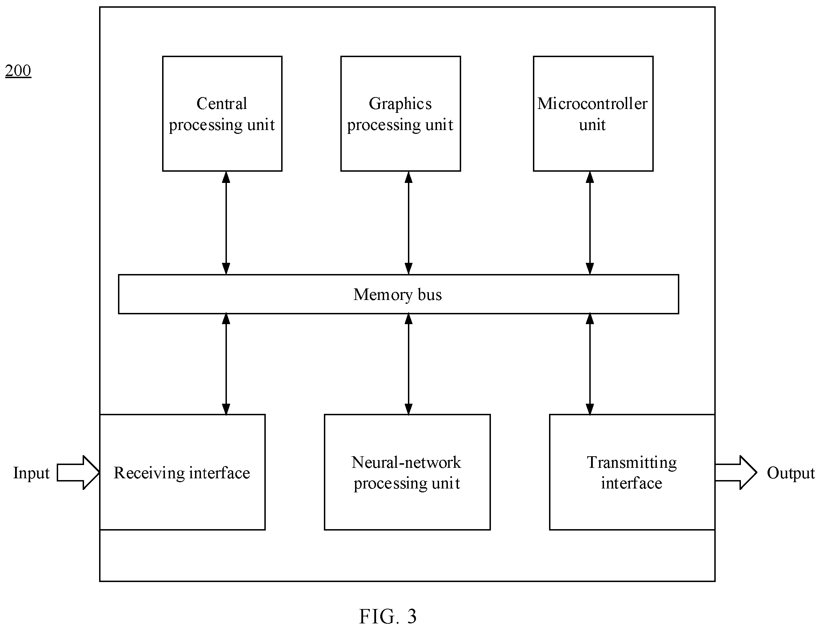

The image processing method provided in the embodiments of this application may also be applied to various image processing apparatuses. FIG. 3 is a diagram of a hardware architecture of an image processing apparatus 200 according to an embodiment of this application. As shown in FIG. 3, the image processing apparatus 200 may be, for example, a processor chip. For example, the diagram of the hardware architecture shown in FIG. 3 may be the processor 110 in FIG. 2, and the image processing method provided in the embodiments of this application may be applied to the processor chip.

As shown in FIG. 3, the image processing apparatus 200 includes at least one CPU, a memory, a microcontroller unit (microcontroller unit, MCU), a GPU, an NPU, a memory bus, a receiving interface, a transmitting interface, and the like. In addition, the image processing apparatus 200 may include an AP, a decoder, a dedicated graphics processing unit, and the like.

The foregoing parts of the image processing apparatus 200 are coupled through connectors. For example, the connectors include various interfaces, transmission lines, buses, and the like. The interfaces are usually electrical communication interfaces, but may alternatively be mechanical interfaces or other forms of interfaces. This is not limited in this embodiment of this application.

Optionally, the CPU may be a single-core (single-CPU) processor or a multi-core (multi-CPU) processor.

Optionally, the CPU may be a processor group including a plurality of processors, and the plurality of processors are coupled to each other through one or more buses. The connection interface may be a data input interface of the processor chip. Optionally, the receiving interface and the transmitting interface each may be a high definition multimedia interface (high definition multimedia interface, HDMI), a V-By-One interface, an embedded display port (embedded display port, eDP), a mobile industry processor interface (mobile industry processor interface, MIPI), a display port (DP), or the like. For the memory, refer to the description of the internal memory 121. In one possible implementation, the foregoing parts are integrated on a same chip. In another possible implementation, the CPU, the GPU, the decoder, the receiving interface, and the transmitting interface are integrated on a chip, and parts inside the chip access an external memory through a bus. The dedicated graphics processing unit may be a dedicated ISP.

Optionally, the NPU may serve as an independent processor chip. The NPU is configured to implement various operations related to a neural network or deep learning. The image processing method provided in the embodiments of this application may be implemented by the GPU or the NPU, or may be implemented by the dedicated graphics processing unit.

It should be understood that the chips in this embodiment of this application are systems manufactured on a same semiconductor substrate by using an integrated circuit process, which are also referred to as semiconductor chips, and may be a collection of integrated circuits formed on the substrate by using the integrated circuit process. Outer layers of the chips are usually packaged by semiconductor packaging materials. The integrated circuits may include various functional components, and each type of functional component includes a logic gate circuit and transistors such as a metal oxide semiconductor (metal oxide semiconductor, MOS) transistor and a diode, and may also include another component, for example, a capacitor, a resistor, or an inductor. All the functional components can work independently or work under action of necessary driving software, and can implement various functions such as communication, operation, or storage.

The following describes in detail the image processing method provided in the embodiments of this application with reference to the accompanying drawings in the specification.

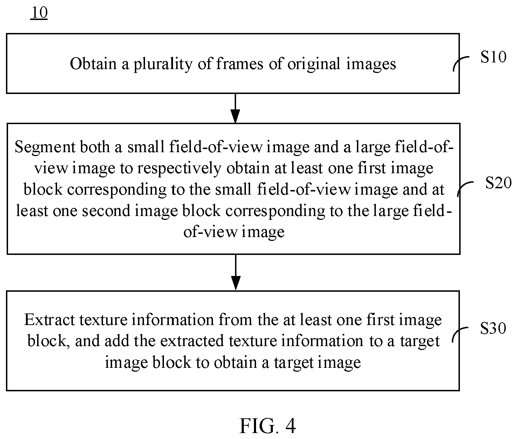

FIG. 4 is a schematic flowchart of an image processing method according to an embodiment of this application. As shown in FIG. 4, the image processing method 10 includes S10 to S30.

S10: Obtain a plurality of frames of original images, where the plurality of frames of original images are images photographed for a same to-be-photographed scene.

The plurality of frames of original images include a small field-of-view image and a large field-of-view image. A field of view corresponding to the large field-of-view image includes a field of view corresponding to the small field-of-view image.

The image processing method may be executed by the electronic apparatus 100 provided with the camera module shown in FIG. 2, or may be executed by the image processing apparatus 200 shown in FIG. 3. When the execution body is the electronic device, the plurality of frames of original images are obtained by the camera in the camera module. Specific several cameras or a specific camera used to obtain the plurality of frames of original images may be set and modified based on a requirement. This is not limited in this embodiment of this application. When the execution body is the image processing apparatus, the plurality of frames of original images may be obtained through the receiving interface, and the plurality of frames of original images are photographed by a camera module of an electronic device connected to the image processing apparatus.

The original image may also be referred to as a RAW image. The original image may be an original image directly photographed, or may be an original image obtained by intercepting a photographed video.

In the obtained plurality of frames of original images, there may be both one or more frames of small field-of-view images and one or more frames of large field-of-view images, but the obtained plurality of frames of original images include at least one frame of small field-of-view image and one frame of large field-of-view image.

It should be understood that the small field-of-view image and the large field-of-view image may be photographed at the same time or may not be photographed at the same time, but at least should be images photographed for a same to-be-photographed scene in a same time period. For example, a same to-be-photographed scene is photographed in two seconds to obtain a plurality of frames of small field-of-view images and a plurality of frames of field-of-view images.

Optionally, sizes of the plurality of frames of original images may all be the same. Certainly, the sizes of the plurality of frames of original images may be partially the same and partially different, or may be completely different. This is not limited in this embodiment of this application.

Optionally, the plurality of frames of original images may be obtained consecutively, and same or different time may be spaced for obtaining the plurality of frames of original images. Certainly, the plurality of frames of original images may not be obtained consecutively. This is not limited in this embodiment of this application.

It should be understood that the field of view corresponding to the large field-of-view image is larger than the field of view corresponding to the small field-of-view image, and the field of view corresponding to the large field-of-view image includes the field of view corresponding to the small field-of-view image. Therefore, the large field-of-view image and the small field-of-view image have a field-of-view overlapping part. The field-of-view overlapping part has the field of view corresponding to the small field-of-view image. In other words, the large field-of-view image includes content in the small field-of-view image.

It should be further understood that a larger field of view indicates that a photographed image has less detail information and is less clear. Therefore, the large field-of-view image captures less detail information and has a lower definition than the small field-of-view image.

S20: Segment both the small field-of-view image and the large field-of-view image to respectively obtain at least one first image block corresponding to the small field-of-view image and at least one second image block corresponding to the large field-of-view image.

The at least one first image block and the at least one second image block have a mapping relationship, that is, one or more first image blocks have a mapping relationship with one or more second image blocks.

It should be understood that a quantity of first image blocks and a quantity of second image blocks that are respectively obtained by segmenting both the large field-of-view image and the small field-of-view image may be the same or different. However, because the field of view corresponding to the large field-of-view image is larger, the quantity of second image blocks obtained by segmenting the large field-of-view image should be greater than or equal to the quantity of first image blocks obtained by segmenting the small field-of-view image, and the second image block obtained by segmenting the large field-of-view image should include at least one first image block obtained by segmenting the small field-of-view image.

It should be understood that there may be a mapping relationship between the first image block and the second image block in terms of quantity or in terms of content. The mapping relationship may be a one-to-one mapping relationship, or may be a one-to-many mapping relationship, a many-to-one mapping relationship, or a many-to-many mapping relationship. A specific mapping relationship is determined by a segmentation manner, and the segmentation manner may be selected and modified based on a requirement. This is not limited in this embodiment of this application.

In an embodiment of the present invention, S20 includes:

performing semantic segmentation (semantic segmentation) on both the small field-of-view image and the large field-of-view image by using a deep learning network model to respectively obtain the at least one first image block corresponding to the small field-of-view image and the at least one second image block corresponding to the large field-of-view image.

Each first image block and each second image block has a corresponding category. After semantic segmentation is performed on the small field-of-view image, when only one first image block is obtained, the first image block corresponds to one category; or when a plurality of first image blocks are obtained, the plurality of first image blocks correspond to different categories.

After semantic segmentation is performed on the large field-of-view image, when only one second image block is obtained, the second image block corresponds to one category; or when a plurality of second image blocks are obtained, the plurality of second image blocks correspond to different categories.

Herein, the mapping relationship is that categories of M first image blocks are the same as categories of N second image blocks, where M and N are respectively integers greater than or equal to 1.

It should be understood that a semantic meaning refers to a meaning of speech in speech recognition, but in the image field, the semantic meaning refers to content of an image and understanding of a meaning of the image. Based on this, semantic segmentation means obtaining different objects in an image through segmentation from a perspective of a pixel.

It should be understood that categories are content attributes of different image blocks in an image. In other words, the categories are types or classes respectively corresponding to different objects in the image. The category may be preset and modified based on a requirement, and is not limited in this embodiment of this application. For example, the category may be an animal such as "cat" or "dog", or a plant such as "flower", or may be an object such as "desk" or "vehicle".

For example, if there are three persons in an image and each person rides a bicycle, when semantic segmentation is performed on the image, image blocks corresponding to the three persons may be obtained through segmentation, where a category of each image block corresponds to a category of "human". However, for image blocks corresponding to the three bicycles that are obtained through segmentation, a category of each image block corresponds to a category of "bicycle".

It should be understood that in the plurality of first image blocks, all the first images may correspond to different categories, or a plurality of groups of first image blocks may correspond to different categories, where each group of first image blocks includes one or more first image blocks. In the plurality of second image blocks, all the second image blocks may correspond to different categories, or a plurality of groups of second image blocks may correspond to different categories, where each group of second image blocks includes one or more second image blocks.

It should be understood that both the large field-of-view image and the small field-of-view image may include a plurality of image blocks belonging to a same category. Therefore, there may be a plurality of first image blocks corresponding to a same category in the small field-of-view image. Similarly, there may be a plurality of second image blocks corresponding to a same category in the large field-of-view image. In addition, a field-of-view image corresponding to the large field-of-view image includes the field of view corresponding to the small field-of-view image, that is, the large field-of-view image includes the content in the small field-of-view image. Therefore, categories of M first image blocks may be the same as categories of N second image blocks, where M and N are respectively integers greater than or equal to 1.

For example, the mapping relationship is as follows: A category of one first image block is the same as categories of a plurality of second image blocks, categories of a plurality of first image blocks are the same as a category of one second image block, or categories of a plurality of first image blocks are the same as categories of a plurality of second image blocks.

Optionally, the deep learning network model for performing semantic segmentation herein may be any one of a fully convolutional network (FCN), SegNet, and DeepLab.

Certainly, the deep learning network model may be another model as long as a semantic segmentation function can be implemented. The deep learning network model may be specifically set based on a requirement, and is not limited in this embodiment of this application.

In another embodiment of the present invention, S20 includes:

segmenting both the small field-of-view image and the large field-of-view image based on a color or a tone to respectively obtain the at least one first image block corresponding to the small field-of-view image and the at least one second image block corresponding to the large field-of-view image.

Each first image block and each second image block has a corresponding color or tone. After the small field-of-view image is segmented, when only one first image block is obtained, the first image block corresponds to one color or tone; or when a plurality of first image blocks are obtained, the plurality of first image blocks correspond to different colors or tones.

After the large field-of-view image is segmented, when only one second image block is obtained, the second image block corresponds to one color or tone; or when a plurality of second image blocks are obtained, the plurality of second image blocks correspond to different colors or tones.

Herein, the mapping relationship is that colors or tones of P first image blocks are the same as colors or tones of Q second image blocks, where P and Q are respectively integers greater than or equal to 1.

It should be understood that in the plurality of first image blocks, all the first images may correspond to different colors or tones, or a plurality of groups of first image blocks may correspond to different colors or tones, where each group of first image blocks includes one or more first image blocks. In the plurality of second image blocks, all the second image blocks may correspond to different colors or tones, or a plurality of groups of second image blocks may correspond to different colors or tones, where each group of second image blocks includes one or more second image blocks.

It should be understood that both the large field-of-view image and the small field-of-view image may include a plurality of image blocks belonging to a same color or tone. Therefore, there may be a plurality of first image blocks corresponding to a same color or tone in the small field-of-view image. Similarly, there may be a plurality of second image blocks corresponding to a same color or tone in the large field-of-view image. In addition, the large field-of-view image includes the content in the small field-of-view image. Therefore, colors of P first image blocks may be the same as colors of Q second image blocks, or tones of P first image blocks may be the same as tones of Q second image blocks, where P and Q are respectively integers greater than or equal to 1.

For example, the mapping relationship is as follows: A color of one first image block is the same as colors of a plurality of second image blocks, colors of a plurality of first image blocks are the same as a color of one second image block, or colors of a plurality of first image blocks are the same as colors of a plurality of second image blocks.

S30: Extract texture information from the at least one first image block, and add the extracted texture information to a target image block to obtain a target image.

S30 may also be expressed as: extracting texture information from at least some of the plurality of first image blocks, and adding the extracted texture information to a target image block to obtain a target image.

The target image block is a second image block having a mapping relationship with the first image block from which the texture information is extracted. In other words, for any first image block from which the texture information is extracted, the target image block is one or more second image blocks having a mapping relationship with the first image block from which the texture information is extracted. A specific quantity of second image blocks depends on a mapping relationship between the second image block and the first image block that are obtained after segmentation.

In addition, the target image is a large field-of-view image to which the texture information is added.

It should be understood that the texture information in this application refers to concave and convex grooves on a surface of an object and also includes a color pattern on the smooth surface of the object, and the texture information is more usually referred to as a pattern. The texture information can reflect details of an object in the first image block.

It should be understood that because the small field-of-view image has a higher definition than the large field-of-view image, the first image block obtained by segmenting the small field-of-view image also has a higher definition than the second image block obtained by segmenting the large field-of-view image. Therefore, the texture information may be extracted from the first image block and then added to the second image block having a mapping relationship with the first image block from which the texture information is extracted, to improve a definition of the second image block.

It should be further understood that when texture information extracted from different first image blocks is different, if the texture information extracted from the different first image blocks is added to the target image block, details added to different second image blocks may be different, so that the large field-of-view image can be more realistic and has a better stereoscopic effect while detail richness of the large field-of-view image is improved.

Herein, only texture information of the second image block is changed, information such as a color, a high dynamic range (high dynamic range, HDR), and brightness all remain unchanged.

This embodiment of this application provides an image processing method in which a plurality of frames of original images are obtained, a small field-of-view image in the plurality of frames of original images is segmented to obtain at least one corresponding first image block, and a large field-of-view image in the plurality of frames of original images is segmented to obtain at least one corresponding second image block. Because a field of view corresponding to the large field-of-view image includes a field of view corresponding to the small field-of-view image, the at least one first image block and the at least one second image block that are obtained after segmentation have a mapping relationship. Based on this, texture information is further extracted from one or more first image blocks and added to a second image block having a mapping relationship with the first image block from which the texture information is extracted. The small field-of-view image has a higher definition and richer details than the large field-of-view image. Therefore, when the texture information extracted from the first image block is added to the second image block, details of the second image block can be enhanced, thereby improving a definition and quality of the large field-of-view image.

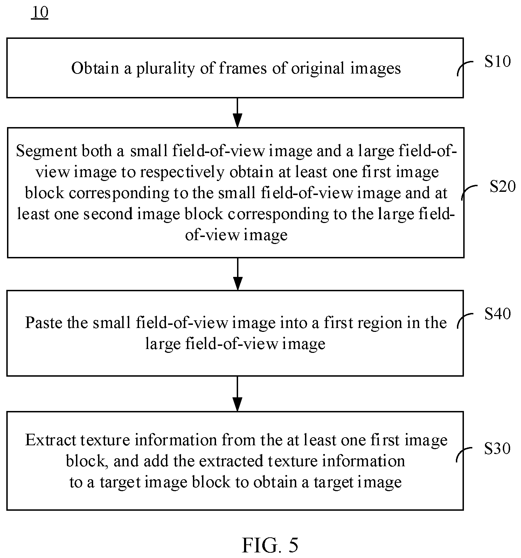

Optionally, as shown in FIG. 5, after S20 and before S30, the method 10 may further include S40.

S40: Paste the small field-of-view image into a first region in the large field-of-view image.

The first region is a region that is in the large field-of-view image and that corresponds to the small field-of-view image. A second region is a region other than the first region in the large field-of-view image.

It should be understood that the first region is a region that is in the large field-of-view image and whose field of view overlaps the field of view of the small field-of-view image, and the second region is a region whose field of view does not overlap the field of view of the small field-of-view image. For example, if a central region in the large field-of-view image is a region whose field of view overlaps the field of view of the small field-of-view image, the central region is the first region, and a region surrounding the first region is the second region.

In this case, when S40 is performed, the target image block in S30 refers to the second image block that is located in the second region and that has a mapping relationship with the first image block from which the texture information is extracted, and a sub-image block in the second image block having a mapping relationship with the first image block from which the texture information is extracted, where the sub-image block is located in the second region.

It should be understood that the small field-of-view image has a higher definition than the large field-of-view image, and when the small field-of-view image is pasted into the first region in the large field-of-view image, a definition of the first region in the large field-of-view image is improved as a whole. Therefore, subsequently, the texture information extracted from the first image block needs to be added to only the second image block located in the second region and the sub-image block that is in the second image block and that is located in the second region, so that a calculation amount can be reduced and processing efficiency can be improved.

Based on this, when the texture information is added, although the second image block has a mapping relationship with the first image block from which the texture information is extracted, the second image block located in the first region and a sub-image block that is in the second image block and that overlaps the first region should be ruled out, and the texture is added to only the second image block located in the second region and the sub-image block that is in the second image block and that overlaps the second region.

Optionally, when semantic segmentation is performed on both the small field-of-view image and the large field-of-view image by using the deep learning network model, the method 10 may further include S21 to S23.

S21: Determine a similarity or a peak signal to noise ratio (peak signal to noise ratio, PSNR) between the at least one first image block and the target image block.

The similarity between the at least one first image block and the target image block may be determined by using a structural similarity (structural similarity, SSIM) algorithm.

S22: When the similarity or the peak signal to noise ratio meets a preset threshold corresponding to the similarity or the peak signal to noise ratio, determine an image entropy (image entropy) of the at least one first image block.

It should be understood that the preset threshold corresponding to the similarity and the preset threshold corresponding to the peak signal to noise ratio both may be set and modified based on a requirement. This is not limited in this embodiment of this application.

It should be understood that the image entropy refers to a statistical form of an image feature and reflects an average amount of information in an image. A one-dimensional entropy of the image refers to an amount of information included in an aggregation feature of grayscale distribution in the image. For example, assuming that Pi represents a proportion of pixels whose grayscale values are i in the image, the one-dimensional entropy may be calculated according to the following formula:

$$H = \sum_{i=0}^{255} Pi \times \log Pi$$

A value range of the grayscale value is [0, 255].

It should be understood that the one-dimensional entropy obtained through calculation according to the foregoing formula is the image entropy. When the determined image entropy of the first image block is large, it indicates that the first image block has a large amount of information and more details. When the determined image entropy of the first image block is small, it indicates that the first image block has a small amount of information and less details. Therefore, an image entropy threshold may be set, and the image entropy of the first image block is compared with the image entropy threshold to determine an amount of information in the first image block.

A value of the image entropy threshold may be set and modified based on a requirement, and is not limited in this embodiment of this application.

S23: Determine, based on the image entropy of the at least one first image block, a manner of adding the texture information extracted from the at least one first image block to the target image block.

S23 may also be expressed as: determining, based on the image entropy of the first image block from which the texture information is extracted, a manner of adding, to the target image block, the texture information extracted from the first image block from which the texture information is extracted.

Accordingly, S30 may be expressed as: extracting the texture information from the at least one first image block, and adding the extracted texture information to the target image block in the determined adding manner to obtain the target image.

Based on this, S23 may further include:

when the image entropy of the at least one first image block is less than the image entropy threshold, the manner of adding the texture information extracted from the at least one first image block to the target image block is an explicit adding manner; and

when the image entropy of the at least one first image block is greater than or equal to the image entropy threshold, the manner of adding the texture information extracted from the at least one first image block to the target image block is an implicit adding manner.

When the determined adding manner is the explicit adding manner, S30 corresponds to the following: adding the extracted texture information to the target image block in the explicit adding manner.

When the determined adding manner is the implicit adding manner, S30 corresponds to the following: adding the extracted texture information to the target image block in the implicit adding manner.

The adding manner includes the explicit adding manner and the implicit adding manner. The explicit adding manner is used to indicate that the texture information is not changed when the texture information is added, and the implicit adding manner is used to indicate that the texture information is adaptively varied when the texture information is added.

In other words, the explicit adding manner means that the texture information extracted from the first image block is copied and pasted into the corresponding target image block. If an area of the second image block is large, the texture information extracted from the first image block may be copied and pasted into the corresponding target image block a plurality of times in a specific order, to fill the target image block.

The implicit adding manner means that when the texture information extracted from the first image block is copied and pasted into the corresponding target image block, the texture information is adaptively varied based on a shape and content of the target image block, for example, processing such as rotation, scaling, or stretching is performed on the texture information. In this case, if the area of the second image block is large, the texture information extracted from the first image block may be copied and pasted into the corresponding target image block a plurality of times, and processing performed during all the times of pasting may be different, so that texture information added to the target image block is not completely the same.

It should be understood that when the image entropy of the first image block is less than the image entropy threshold, it indicates that there is less detail information in the first image block. In this case, the texture information may be directly copied and pasted into the target image block in a simple manner, so that a calculation amount is small and efficiency is high. However, when the image entropy of the first image block is greater than or equal to the image entropy threshold, it indicates that there is more detail information in the first image block. In this case, if explicit addition is performed, a visual effect of the target image block is poor, and it seems that the target image block is stiff arrangement of completely same small image blocks. As a result, content may be fractured sometimes, causing problems such as image distortion. Therefore, the implicit adding manner needs to be used to adaptively vary the texture information extracted from the first image block and then add the texture information to the target image block, so that content in the original target image block and the texture information are fused more naturally and image details are increased, thereby improving a visual effect.

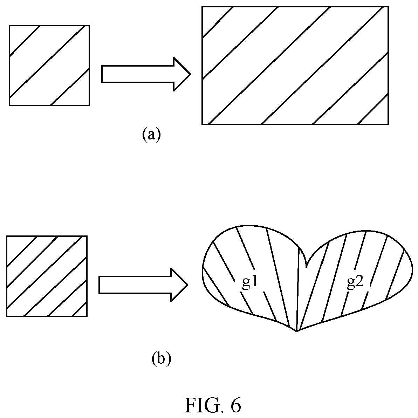

For example, as shown in (a) in FIG. 6, the image entropy of the first image block is less than the image entropy threshold, and therefore, the texture information extracted from the first image block is directly copied and pasted into the target image block without any change. In other words, the texture information is added to the target image block in the explicit adding manner.

As shown in (b) in FIG. 6, the image entropy of the first image block is greater than the image entropy threshold. In this case, because a petal a in the target image block blooms towards the left and a petal b blooms towards the right, when the texture information is added, the texture information extracted from the first image block may be adaptively varied based on a location and a shape of the petal a and then added to the petal a, and the texture information may be adaptively varied based on a location and a shape of the petal b and then added to the petal b. In other words, the texture information is added to the target image block in the implicit adding manner.

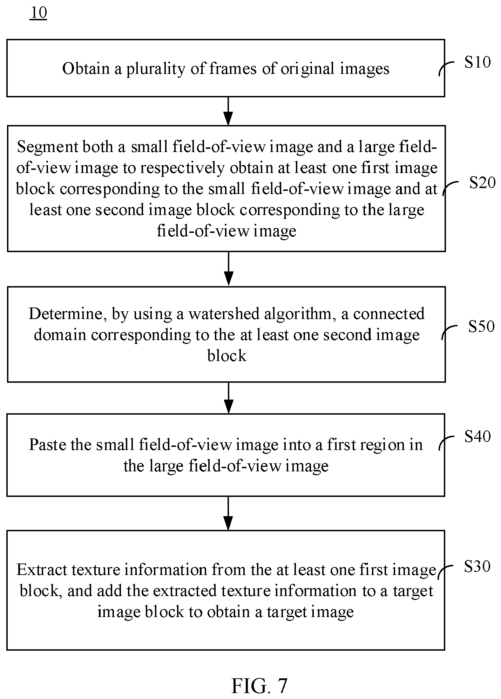

Optionally, as shown in FIG. 7, before S40, the method 10 may further include S50.

S50: Determine, by using a watershed algorithm, a connected domain corresponding to the at least one second image block.

Certainly, another algorithm may be used as long as the connected domain corresponding to the second image block in the large field-of-view image can be determined. This is not limited in this embodiment of this application.

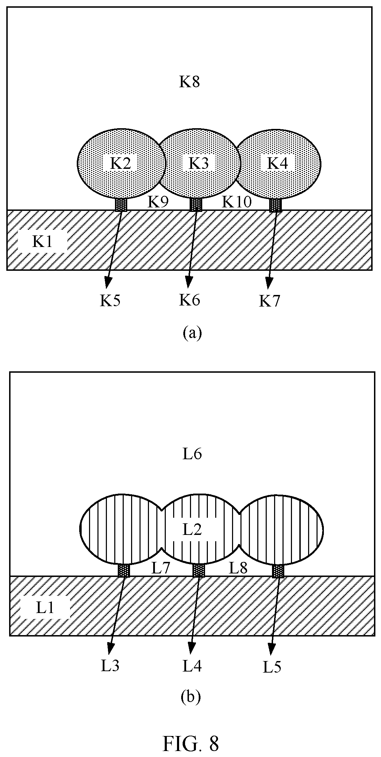

For example, as shown in (a) in FIG. 8, the large field-of-view image may be segmented into a plurality of second image blocks (such as K1~K10). Then, as shown in (b) in FIG. 8, it may be determined, by using the watershed algorithm, that K1 corresponds to a connected domain L1, K2~K3 correspond to a connected domain L2, K5 corresponds to a connected domain L3, K6 corresponds a connected domain L4, K7 corresponds to a connected domain L5, K8 corresponds to a connected domain L7, K9 corresponds to a connected domain L7, and K10 corresponds to a connected domain L8.

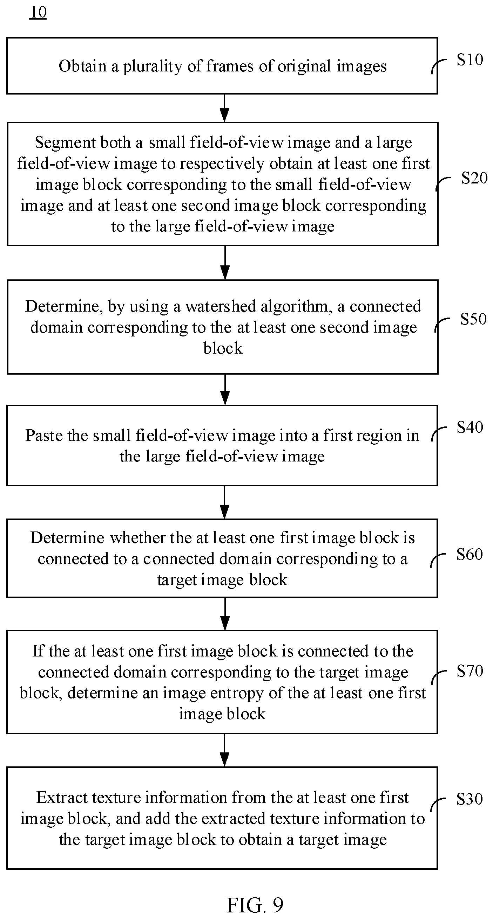

Based on the foregoing, as shown in FIG. 9, after the connected domain corresponding to the second image block is determined, the method 10 further includes S60 and S70.

S60: Determine whether the at least one first image block is connected to a connected domain corresponding to the target image block.

It should be understood that when the method 10 does not include the step of pasting the small field-of-view image into the large field-of-view image, the target image block is a second image block having a mapping relationship with a first image block from which the texture information is extracted, and the connected domain corresponding to the target image block is a connected domain corresponding to the second image block having a mapping relationship.

When the method 10 includes the step of pasting the small field-of-view image into the large field-of-view image, the target image block is a second image block that is located in the second region and that has a mapping relationship with a first image block from which the texture information is extracted, and a sub-image block in the second image block having a mapping relationship with the extracted texture information, where the sub-image block is located in the second region.

When the target image block is the second image block that is located in the second region and that has a mapping relationship with the first image block from which the texture information is extracted, the connected domain corresponding to the target image block is a connected domain corresponding to the second image block.

When the target image block is the sub-image block in the second image block having a mapping relationship with the extracted texture information, where the sub-image block is located in the second region, the connected domain corresponding to the target image block is a connected domain corresponding to the sub-image block.

For example, whether pixel values at a boundary at which the first image block is adjacent to the connected domain corresponding to the target image block are the same may be determined to determine whether the first image block is connected to the connected domain corresponding to the target image block.

For example, if locations of two cameras for photographing the small field-of-view image and the large field-of-view image are fixed, relative locations of the first image block and the target image block are fixed. Therefore, coordinates may be pre-recorded to determine whether the first image block is connected to the connected domain corresponding to the target image block.

For example, key point detection may be performed on the first image block and the target image block by using any algorithm in scale-invariant feature transform (scale-invariant feature transform, SIFT), SURF, ORB, and the like, and then a homography (homography) matrix is calculated, to be specific, a location of a key point in a world coordinate system is converted into a location in a pixel coordinate system. Next, relative locations of key points in the first image block and the target image block in the pixel coordinate system can be obtained through coordinate mapping. Therefore, whether the first image block is connected to the connected domain corresponding to the target image block may be determined based on the relative locations.

It should be understood that even if the first image block and the second image block correspond to a same category, for example, both are leaves, the first image block and the second image block may be leaves of different trees. Therefore, to improve accuracy, it may be further determined whether the first image block is connected to the connected domain corresponding to the target image block. When the first image block is connected to the connected domain corresponding to the target image block, there is a larger possibility that the first image block and the second image block are leaves of a same tree. Therefore, whether the first image block is connected to the connected domain corresponding to the target image block may be determined to improve accuracy of subsequent addition of the texture information, and the texture information in the first image block is added to only the target image block in the connected domain.

S70: If the at least one first image block is connected to the connected domain corresponding to the target image block, determine an image entropy of the at least one first image block.

Then, a manner of adding the texture information extracted from the at least one first image block to the target image block continues to be determined based on the image entropy of the at least one first image block, and the extracted texture information is further added to the target image block in a determined explicit adding manner or implicit adding manner.

S80: If the at least one first image block is not connected to the connected domain corresponding to the target image block, use the method described in S21~S23 to continue to determine a similarity or a peak signal to noise ratio between the at least one first image block and the target image block, and further determine, based on whether the similarity or the peak signal to noise ratio meets a preset threshold corresponding to the similarity or the peak signal to noise ratio, whether an image entropy of the first image block needs to be calculated, and when the image entropy of the first image block needs to be determined, further continue to determine, based on the determined image entropy of the first image block, whether the texture information is added to the target image block in an explicit adding manner or an implicit adding manner.

With reference to the foregoing, this application further provides the following embodiments.

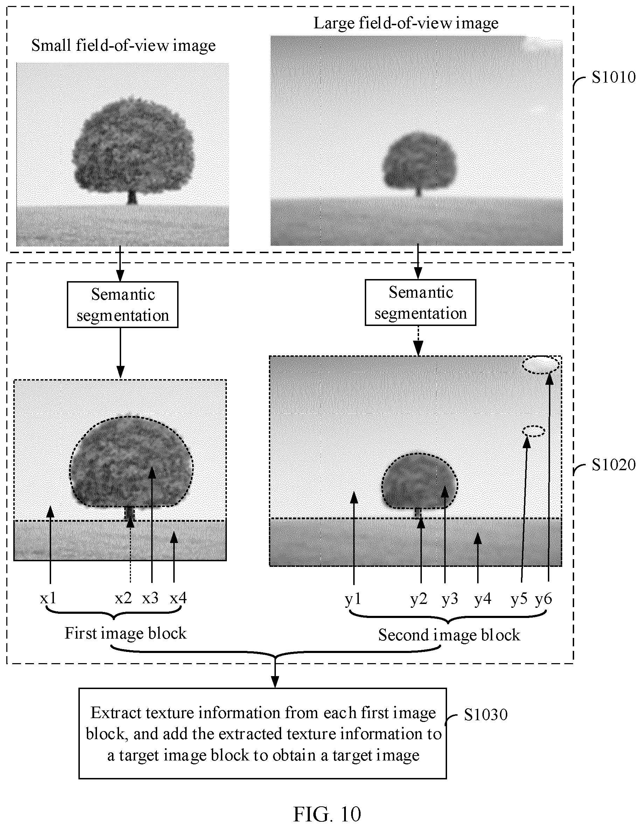

Embodiment 1 provides an image processing method. As shown in FIG. 10, the method includes the following S1010 to S1030.

S 1010: Obtain two frames of original images, where the two frames of original images are images photographed for a same to-be-photographed scene.

The two frames of original images include one frame of small field-of-view image and one frame of large field-of-view image, and a field of view corresponding to the large field-of-view image includes a field of view corresponding to the small field-of-view image.

It should be understood that the small field-of-view image is relatively clear, and the large field-of-view image is relatively blurry.

S1020: Perform semantic segmentation on both the large field-of-view image and the small field-of-view image by using a deep learning network model to respectively obtain four first image blocks corresponding to the small field-of-view image and six second image blocks corresponding to the large field-of-view image.

S1020 may be expressed as: performing semantic segmentation on the small field-of-view image by using the deep learning network model to obtain four first image blocks corresponding to the small field-of-view image, where each first image block correspondingly has a category, for example, x1 is "sky", x2 is "trunk", x3 is "leaf", and x4 is "grassland"; and

performing semantic segmentation on the large field-of-view image by using the deep learning network model to obtain six second image blocks corresponding to the large field-of-view image, where each second image block correspondingly has a category, for example, y1 is "sky", y2 is "trunk", y3 is "leaf", y4 is "grassland", and y5 and y6 are "cloud".

The first image blocks and the second image blocks have the following mapping relationship: x1 and y1 have a same category, x2 and y2 have a same category, x3 and y3 have a same category, x4 and y4 have a same category, and there is no first image block having a same category as y5 and y6.

Herein, the deep learning network model is any one of FCN, SegNet, and DeepLab.

S1030: Extract texture information from each first image block, and add the extracted texture information to a target image block to obtain a target image.

The target image block is one or more second image blocks having a same category as the first image block from which the texture information is extracted.

The target image is a large field-of-view image to which the texture information is added.

S1030 may be expressed as: extracting texture information from x1, and adding the extracted texture information to y1; extracting texture information from x2, and adding the extracted texture information to y2; extracting texture information from x3, and adding the extracted texture information to y3; and extracting texture information from x4, and adding the extracted texture information to y4.

Herein, because there is no first image block having a same category as y5 and y6, the texture information is not added to y5 and y6. However, the texture information is added to all other second image blocks, and therefore a definition and quality of the large field-of-view image are improved as a whole.

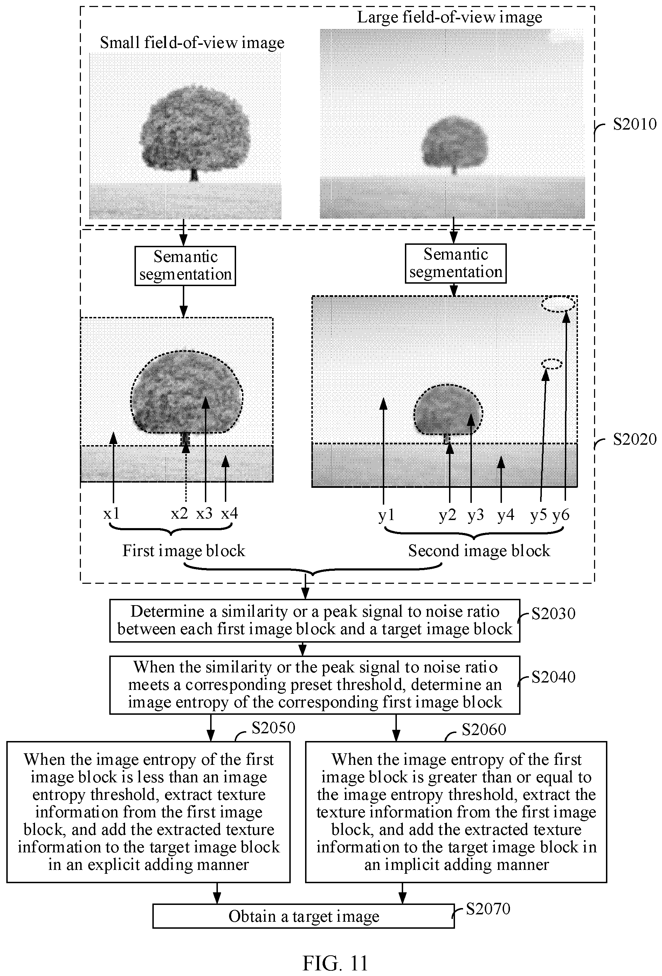

Embodiment 2 provides an image processing method. As shown in FIG. 11, the method includes the following S2010 to S2070.

S2010: Obtain two frames of original images, where the two frames of original images are images photographed for a same to-be-photographed scene.

The two frames of original images include one frame of small field-of-view image and one frame of large field-of-view image, and a field of view corresponding to the large field-of-view image includes a field of view corresponding to the small field-of-view image.

The small field-of-view image is relatively clear, and the large field-of-view image is relatively blurry.

S2020: Perform semantic segmentation on both the large field-of-view image and the small field-of-view image by using a deep learning network model to respectively obtain four first image blocks corresponding to the small field-of-view image and six second image blocks corresponding to the large field-of-view image.

S2020 may be expressed as: performing semantic segmentation on the small field-of-view image by using the deep learning network model to obtain four first image blocks corresponding to the small field-of-view image, where each first image block correspondingly has a category, for example, x1 is "sky", x2 is "trunk", x3 is "leaf", and x4 is "grassland"; and

performing semantic segmentation on the large field-of-view image by using the deep learning network model to obtain six second image blocks corresponding to the large field-of-view image, where each second image block correspondingly has a category, for example, y1 is "sky", y2 is "trunk", y3 is "leaf", y4 is "grassland", and y5 and y6 are "cloud".

The first image blocks and the second image blocks have the following mapping relationship: x1 and y1 have a same category, x2 and y2 have a same category, x3 and y3 have a same category, x4 and y4 have a same category, and there is no first image block having a same category as y5 and y6.

Herein, the deep learning network model is any one of FCN, SegNet, and DeepLab.

S2030: Determine a similarity or a peak signal to noise ratio between each first image block and a target image block.

S2030 may be expressed as: determining a similarity or a peak signal to noise ratio between x1 and y1, determining a similarity or a peak signal to noise ratio between x2 and y2, determining a similarity or a peak signal to noise ratio between x3 and y3, and determining a similarity or a peak signal to noise ratio between x4 and y4.

S2040: When the similarity or the peak signal to noise ratio meets a preset threshold corresponding to the similarity or the peak signal to noise ratio, determine an image entropy of the corresponding first image block.

S2040 may be expressed as: determining an image entropy of x1 if the similarity between x1 and y1 meets the corresponding preset threshold, skipping continuing to perform processing if the similarity between x2 and y2 does not meet the preset threshold, determining an image entropy corresponding to x3 if the similarity between x3 and y3 meets the corresponding preset threshold, and determining an image entropy corresponding to x4 if the similarity between x4 and y4 also meets the corresponding preset threshold. A process of determining the image entropy of each first image block based on the peak signal to noise ratio is similar to the foregoing process, and details are not described herein.

When the similarity or the peak signal to noise ratio does not meet the preset threshold corresponding to the similarity or the peak signal to noise ratio, it indicates that the first image block is not similar to the target image block. In this case, there is no need to determine the image entropy of the first image block, and the procedure ends.

S2050: When the image entropy of the first image block is less than an image entropy threshold, extract texture information from the first image block, and add the extracted texture information to the target image block in an explicit adding manner.

S2060: When the image entropy of the first image block is greater than or equal to the image entropy threshold, extract the texture information from the first image block, and add the extracted texture information to the target image block in an implicit adding manner.

The explicit adding manner is used to indicate that the texture information is not changed when the texture information is added, and the implicit adding manner is used to indicate that the texture information is adaptively varied when the texture information is added.

S2070: Obtain a target image according to S2050 and S2060.

The target image is a large field-of-view image to which the texture information is added in the explicit adding manner and/or the implicit adding manner.

2050 to S2070 may be expressed as: if the image entropy of x1 is less than the image entropy threshold, the texture information extracted from x1 is added to y1 in the explicit adding manner; if the image entropy corresponding to x3 is greater than the image entropy threshold, the texture information extracted from x3 is added to y3 in the implicit adding manner, and if the image entropy of x4 is equal to the image entropy threshold, the texture information extracted from x4 is also added to y4 in the implicit adding manner, to obtain the target image.

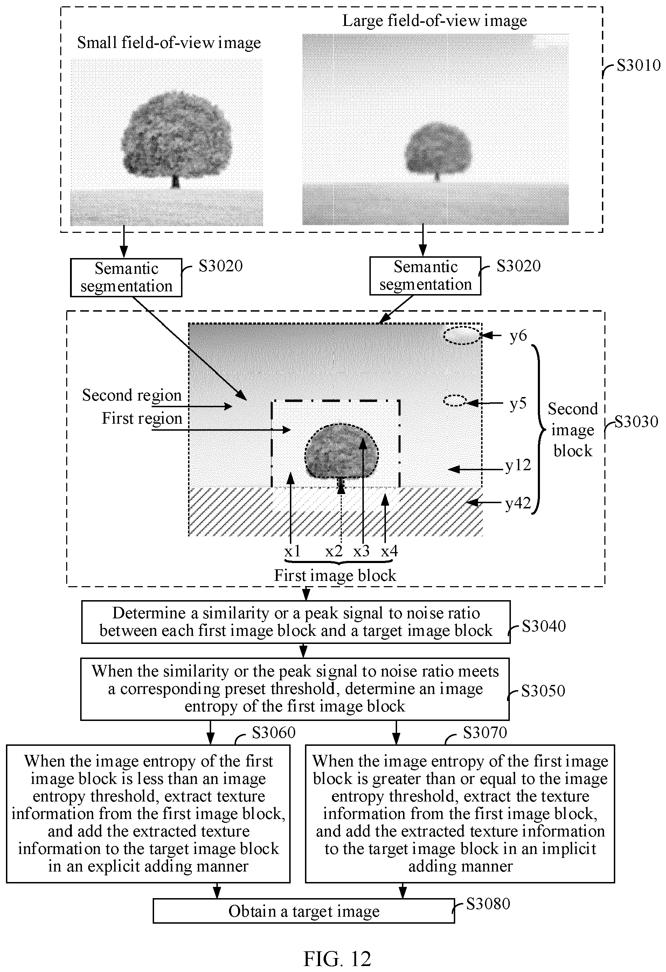

Embodiment 3 provides an image processing method. As shown in FIG. 12, the method includes the following S3010 to S3070.

S3010: Obtain two frames of original images, where the two frames of original images are images photographed for a same to-be-photographed scene.

The two frames of original images include one frame of small field-of-view image and one frame of large field-of-view image, and a field of view corresponding to the large field-of-view image includes a field of view corresponding to the small field-of-view image.

The small field-of-view image is relatively clear, and the large field-of-view image is relatively blurry.

S3020: Perform semantic segmentation on both the large field-of-view image and the small field-of-view image by using a deep learning network model to respectively obtain four first image blocks corresponding to the small field-of-view image and six second image blocks corresponding to the large field-of-view image.

S3020 may be expressed as: performing semantic segmentation on the small field-of-view image by using the deep learning network model to obtain four first image blocks corresponding to the small field-of-view image, where each first image block correspondingly has a category, for example, x1 is "sky", x2 is "trunk", x3 is "leaf", and x4 is "grassland"; and

performing semantic segmentation on the large field-of-view image by using the deep learning network model to obtain six second image blocks corresponding to the large field-of-view image, where each second image block correspondingly has a category, for example, y1 is "sky", y2 is "trunk", y3 is "leaf", y4 is "grassland", and y5 and y6 are "cloud".

The first image blocks and the second image blocks have the following mapping relationship: x1 and y1 have a same category, x2 and y2 have a same category, x3 and y3 have a same category, x4 and y4 have a same category, and there is no first image block having a same category as y5 and y6.

Herein, the deep learning network model is any one of FCN, SegNet, and DeepLab.

S3030: With reference to FIG. 12, paste the small field-of-view image into a first region in the large field-of-view image.

The first region is a region that is in the large field-of-view image and that corresponds to the small field-of-view image, and a second region is a region other than the first region in the large field-of-view image.

In this case, a target image block is a second image block that is located in the second region and that has a same category as the first image block, and a sub-image block in the second image block having a same category as the first image block, where the sub-image block is located in the second region.

S3040: Determine a similarity or a peak signal to noise ratio between each first image block and a target image block.

It should be understood that, y1 has a same category as x1, and y12 is a sub-image block that is in y1 and that is located in the second region; y2 has a same category as x2 but is located in the first region, and is no longer calculated; y3 has a same category as x3 but is located in the first region, and is also no longer calculated; and y4 has a same category as x4, and y42 is a sub-image block that is in y4 and that is located in the second region.

Therefore, S3040 may be expressed as: determining a similarity or a peak signal to noise ratio between x1 and y12, and determining a similarity or a peak signal to noise ratio between x4 and y42.

S3050: When the similarity or the peak signal to noise ratio meets a preset threshold corresponding to the similarity or the peak signal to noise ratio, determine an image entropy of the first image block.

S3050 may be expressed as: determining an image entropy of x1 if the similarity between x1 and y12 meets the corresponding preset threshold, and determining an image entropy corresponding to x4 if the similarity between x4 and y42 meets the corresponding preset threshold. A process of determining the image entropy of each first image block based on the peak signal to noise ratio is similar to the foregoing process, and details are not described herein.

When the similarity or the peak signal to noise ratio does not meet the preset threshold corresponding to the similarity or the peak signal to noise ratio, it indicates that the first image block is not similar to the target image block. In this case, there is no need to determine the image entropy of the first image block, and the procedure ends.

S3060: When the image entropy of the first image block is less than an image entropy threshold, extract texture information from the first image block, and add the extracted texture information to the target image block in an explicit adding manner.

S3070: When the image entropy of the first image block is greater than or equal to the image entropy threshold, extract the texture information from the first image block, and add the extracted texture information to the target image block in an implicit adding manner.

The explicit adding manner is used to indicate that the texture information is not changed when the texture information is added, and the implicit adding manner is used to indicate that the texture information is adaptively varied when the texture information is added.

S3080: Obtain a target image according to S3060 and S3070.

The target image is a large field-of-view image to which the texture information is added in the explicit adding manner and/or the implicit adding manner.

S3060 to S3080 may be expressed as: if the image entropy of x1 is less than the image entropy threshold, the texture information extracted from x1 is added to y12 in the explicit adding manner; and if the image entropy of x4 is equal to the image entropy threshold, the texture information extracted from x4 is added to y42 in the implicit adding manner, to obtain the target image.

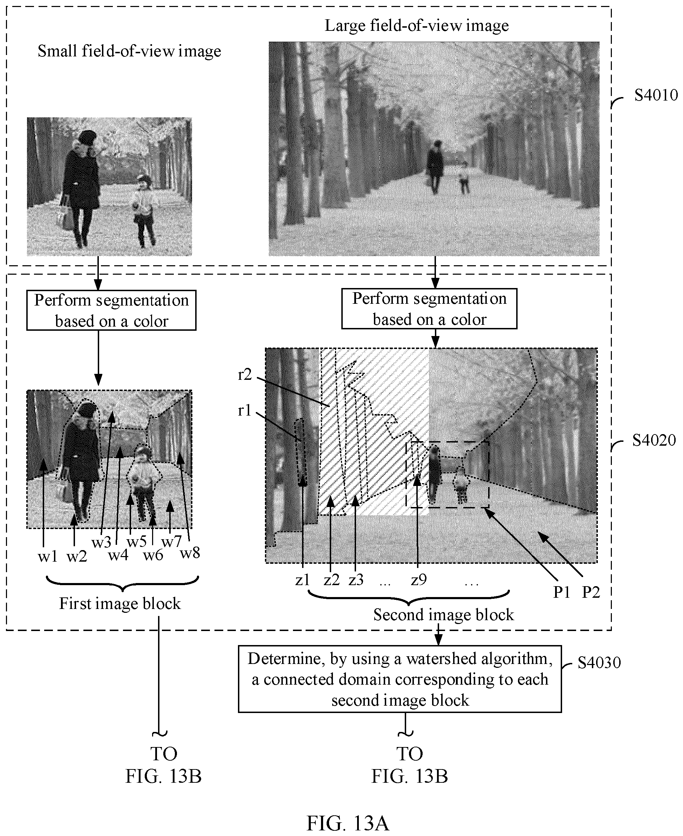

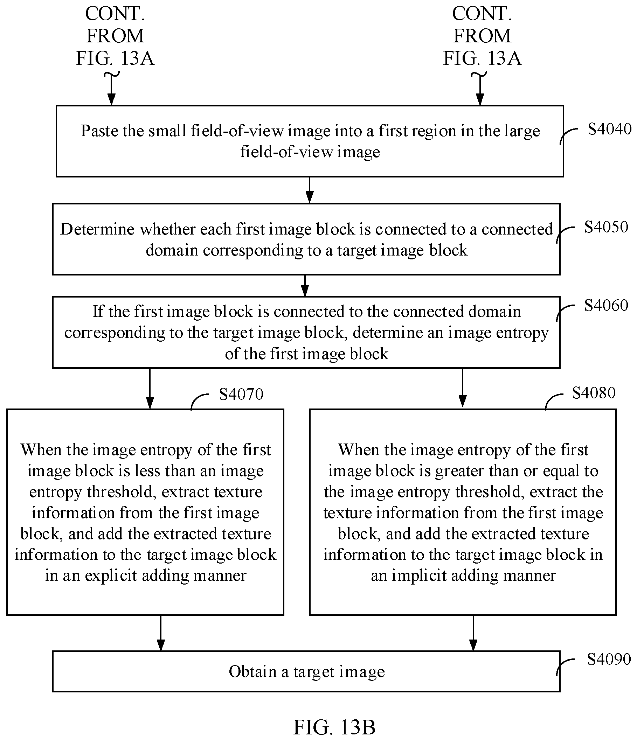

Embodiment 4 provides an image processing method. As shown in FIG. 13A and FIG. 13B, the method includes the following S4010 to S4090.

S4010: Obtain two frames of original images, where the two frames of original images are images photographed for a same to-be-photographed scene.

The two frames of original images include one frame of small field-of-view image and one frame of large field-of-view image, and a field of view corresponding to the large field-of-view image includes a field of view corresponding to the small field-of-view image.

The small field-of-view image is relatively clear, and the large field-of-view image is relatively blurry.

S4020: Segment both the large field-of-view image and the small field-of-view image based on a color or a tone to respectively obtain a plurality of first image blocks corresponding to the small field-of-view image and a plurality of second image blocks corresponding to the large field-of-view image.

S4020 may be expressed as: segmenting the small field-of-view image based on a color to obtain a plurality of first image blocks corresponding to the small field-of-view image, where each first image block correspondingly has a color, for example, w1 is "brown", w2 is "black", w3 is "yellow", w4 is "green", and the like; and segmenting the large field-of-view image based on a color to obtain a plurality of second image blocks corresponding to the large field-of-view image, where each second image block correspondingly has a color, for example, z1 is "green", z2 and z3 are "brown", and the like.

The first image blocks and the second image blocks have the following mapping relationship: w1 has a same color as z2 and z3, and w4 has a same color as z1.

S4030: Determine, by using a watershed algorithm, a connected domain corresponding to each second image block.

With reference to FIG. 13A, for example, z1 corresponds to a connected domain r1, and z2~z9 correspond to a connected domain r2 (a region with sloping lines shown in FIG. 13A).

S4040. Paste the small field-of-view image into a first region in the large field-of-view image.

The first region is a region that is in the large field-of-view image and that corresponds to the small field-of-view image, and a second region is a region other than the first region in the large field-of-view image.

In this case, a target image block is a second image block that is located in the second region and that has a same color as the first image block, and a sub-image block in the second image block having a same color as the first image block, where the sub-image block is located in the second region.

S4050: Determine whether each first image block is connected to a connected domain corresponding to a target image block.

For example, if z2, z3, and the like having a same color as w1 are all located in the second region, z2, z3, and the like are the target image blocks, and a connected domain corresponding to z2, z3, and the like is r2.

One part (P1 shown in FIG. 13A) of z9 having a same color as w1 is located in the first region, and the other part (P2 shown in FIG. 13A) is located in the second region. After the small field-of-view image is pasted into the large field-of-view image, a target image block corresponding to w1 is a sub-image block that is in z9 and that is located in the second region. Because a connected domain corresponding to the sub-image block that is in z9 and that is located in the second region is r2, whether the first image block w1 is connected to the connected domain r2 needs to be determined.

S4060: If the first image block is connected to the connected domain corresponding to the target image block, determine an image entropy of the first image block; or if the first image block is not connected to the connected domain corresponding to the target image block, the procedure ends.

The step of determining whether the first image block is connected to the connected domain corresponding to the target image block is the same as that described in S60, and details are not described herein again.

S4070: When the image entropy of the first image block is less than an image entropy threshold, extract texture information from the first image block, and add the extracted texture information to the target image block in an explicit adding manner.

S4080: When the image entropy of the first image block is greater than or equal to the image entropy threshold, extract the texture information from the first image block, and add the extracted texture information to the target image block in an implicit adding manner.

The explicit adding manner is used to indicate that the texture information is not changed when the texture information is added, and the implicit adding manner is used to indicate that the texture information is adaptively varied when the texture information is added.

S4090: Obtain a target image according to S4070 and S4080.

S4070 to S4090 may be expressed as: Because the first image block w1 is connected to the connected domain r2, when the image entropy of w1 is greater than the image entropy threshold, the texture information extracted from w1 is added in the implicit adding manner to image blocks such as z2 and z3 located in the second region, and the sub-image block that is in z9 and that is located in the second region.

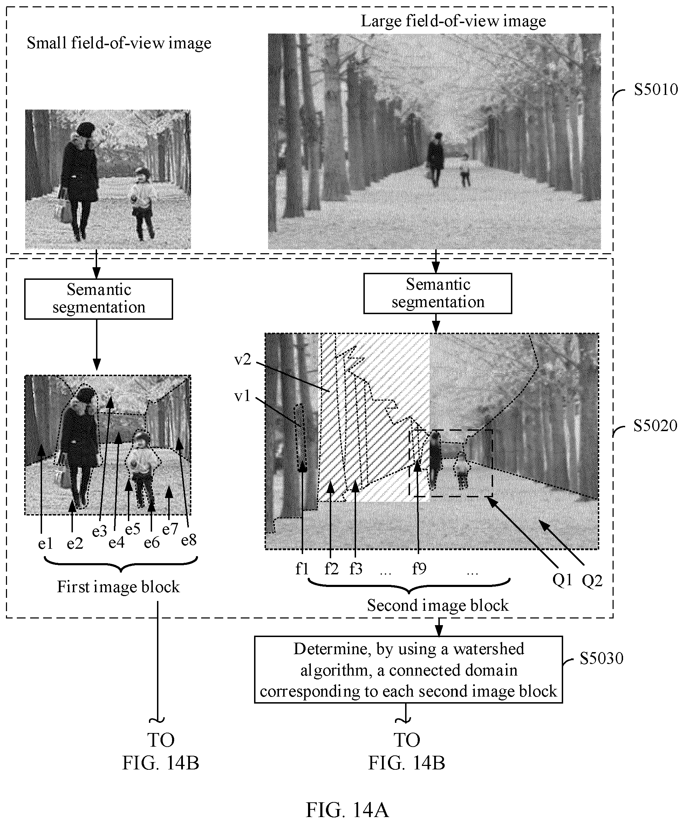

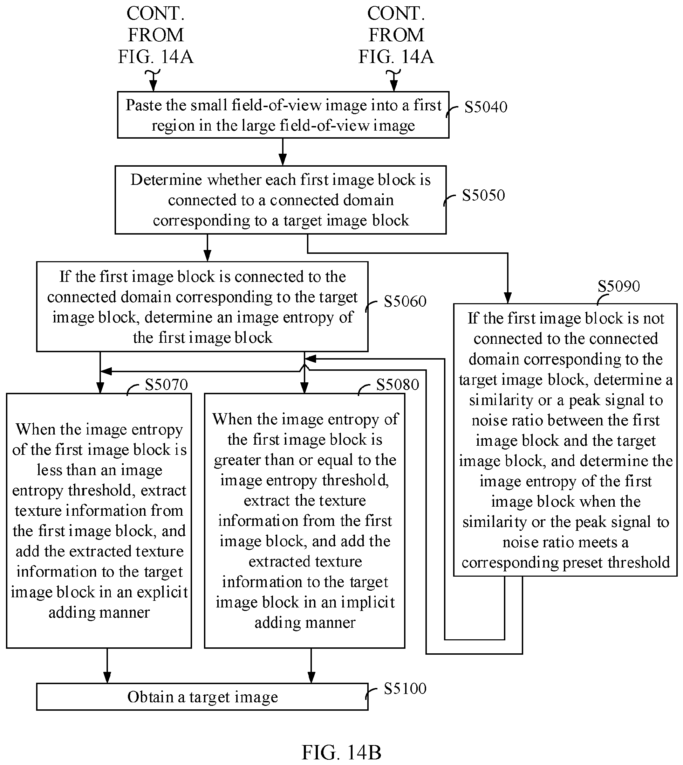

Embodiment 5 provides an image processing method. As shown in FIG. 14A and FIG. 14B, the method includes the following S5010 to S5100.

S5010: Obtain two frames of original images, where the two frames of original images are images photographed for a same to-be-photographed scene.

The two frames of original images include one frame of small field-of-view image and one frame of large field-of-view image, and a field of view corresponding to the large field-of-view image includes a field of view corresponding to the small field-of-view image.

The small field-of-view image is relatively clear, and the large field-of-view image is relatively blurry.

S5020: Perform semantic segmentation on both the large field-of-view image and the small field-of-view image by using a deep learning network model to respectively obtain a plurality of first image blocks corresponding to the small field-of-view image and a plurality of second image blocks corresponding to the large field-of-view image.

S5020 may be expressed as: performing semantic segmentation on the small field-of-view image by using the deep learning network model to obtain a plurality of first image blocks corresponding to the small field-of-view image, where each first image block correspondingly has a category, for example, e1 is "trunk", e2 is "human", e3 is "leaf", and the like; and

performing semantic segmentation on the large field-of-view image by using the deep learning network model to obtain a plurality of second image blocks corresponding to the large field-of-view image, where each second image block correspondingly has a category, for example, f1~f9 all are "trunk", and the like.

The category of e1 is the same as the category of each of f1~f9.

Herein, the deep learning network model is any one of FCN, SegNet, and DeepLab.

S5030: Determine, by using a watershed algorithm, a connected domain corresponding to each second image block.

With reference to FIG. 14A, for example, f1 corresponds to a connected domain v1, and f2~f9 correspond to a connected domain v2 (a region with sloping lines shown in FIG. 14A).

S5040. Paste the small field-of-view image into a first region in the large field-of-view image.

The first region is a region that is in the large field-of-view image and that corresponds to the small field-of-view image, and a second region is a region other than the first region in the large field-of-view image.

In this case, a target image block is a second image block that is located in the second region and that has a same category as the first image block, and a sub-image block in the second image block having a same category as the first image block, where the sub-image block is located in the second region.

S5050: Determine whether each first image block is connected to a connected domain corresponding to a target image block.

For example, if f2, f3, and the like having a same category as e1 are all located in the second region, f2, f3, and the like are the target image blocks, and a connected domain corresponding to f2, f3, and the like is v2.

One part (Q1 shown in FIG. 14A) of f9 having a same category as e1 is located in the first region, and the other part (Q2 shown in FIG. 14A) is located in the second region. After the small field-of-view image is pasted into the large field-of-view image, a target image block corresponding to e1 is a sub-image block that is in f9 and that is located in the second region. Because a connected domain corresponding to the part that is of f9 and that is located in the second region is v2, whether the first image block e1 is connected to the connected domain v2 needs to be determined.

S5060: If the first image block is connected to the connected domain corresponding to the target image block, determine an image entropy of the first image block.

The step of determining whether the first image block is connected to the connected domain corresponding to the target image block is the same as that described in S60, and details are not described herein again.

S5070: When the image entropy of the first image block is less than an image entropy threshold, extract texture information from the first image block, and add the extracted texture information to the target image block in an explicit adding manner.

S5080: When the image entropy of the first image block is greater than or equal to the image entropy threshold, extract the texture information from the first image block, and add the extracted texture information to the target image block in an implicit adding manner.

The explicit adding manner is used to indicate that the texture information is not changed when the texture information is added, and the implicit adding manner is used to indicate that the texture information is adaptively varied when the texture information is added.

S5090: If the first image block is not connected to the connected domain corresponding to the target image block, continue to determine a similarity or a peak signal to noise ratio between the first image block and the target image block, and determine the image entropy of the first image block when the similarity or the peak signal to noise ratio meets a corresponding preset threshold, and then add the texture in the manners in S5070 and S5080; or the procedure ends if the similarity or the peak signal to noise ratio does not meet the corresponding preset threshold.

S5100: Obtain a target image according to S5070 to S5090.

The target image is a large field-of-view image to which the texture information is added in the explicit adding manner and/or the implicit adding manner.

The foregoing mainly describes the solutions provided in the embodiments of this application from a perspective of an electronic device or an image processing apparatus. It may be understood that to implement the foregoing functions, the electronic device and the image processing apparatus each include a corresponding hardware structure, a software module, or a combination thereof to perform the functions. A person skilled in the art should be easily aware that the units and the algorithm steps in the examples described with reference to the embodiments disclosed in this specification can be implemented in this application in a form of hardware or a combination of hardware and computer software. Whether a function is performed by hardware or by driving hardware by using computer software depends on particular applications and design constraints of the technical solutions. A skilled perform may use different methods for specific applications to implement the described functions, but this implementation should not be considered as beyond the scope of this application.

In the embodiments of this application, the electronic device and the image processing apparatus may be divided into functional modules based on the foregoing method examples, for example, each functional module may be obtained through division for each corresponding function, or two or more functions may be integrated into one processing module. The integrated module may be implemented in a form of hardware or may be implemented in a form of a software functional module. It should be noted that module division in the embodiments of this application is an example, and is merely logical function division. In actual implementation, there may be another division manner. The following is described by using an example in which each functional module is obtained through division for each corresponding function.

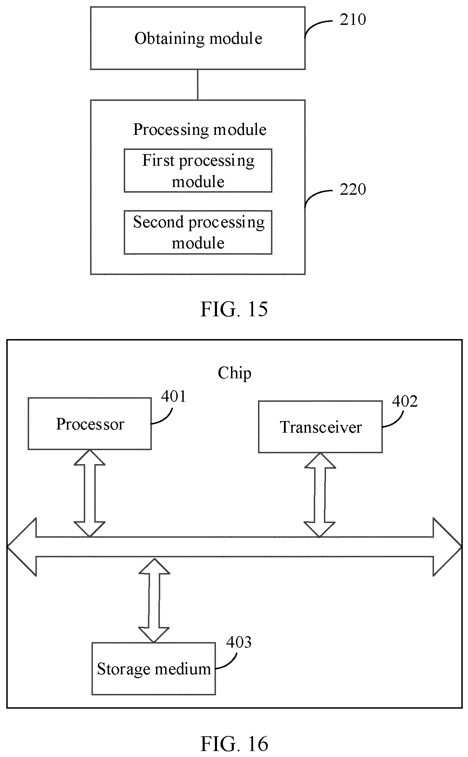

FIG. 15 is a schematic diagram of a structure of an image processing apparatus according to an embodiment of this application. As shown in FIG. 15, the image processing apparatus 200 includes an obtaining module 210 and a processing module 220, and the processing module 220 may include a first processing module and a second processing module.

The image processing apparatus may perform the following solution.

The obtaining module 210 is configured to obtain a plurality of frames of original images. The plurality of frames of original images are images photographed for a same to-be-photographed scene, and the plurality of frames of original images include a first field-of-view image and a second field-of-view image. A field of view corresponding to a large field-of-view image includes a field of view corresponding to a small field-of-view image.

The first processing module is configured to segment both the small field-of-view image and the large field-of-view image to respectively obtain at least one first image block corresponding to the small field-of-view image and at least one second image block corresponding to the large field-of-view image. The at least one first image block and the at least one second image block have a mapping relationship.

The second processing module is configured to extract texture information from the first image block, and add the extracted texture information to a target image block to obtain a target image. The target image block is the second image block having a mapping relationship with the at least one first image block.

Optionally, the first processing module is configured to perform semantic segmentation on both the small field-of-view image and the large field-of-view image by using a deep learning network model to respectively obtain the at least one first image block corresponding to the small field-of-view image and the at least one second image block corresponding to the large field-of-view image.

Each first image block and each second image block has a corresponding category. When the at least one first image block includes a plurality of first image blocks, the plurality of first image blocks correspond to different categories. When the at least one second image block includes a plurality of second image blocks, the plurality of second image blocks correspond to different categories.

The mapping relationship is that categories of M first image blocks are the same as categories of N second image blocks, where M and N are respectively integers greater than or equal to 1, and the categories are used to represent content attributes of the first image blocks and the second image blocks.

Optionally, the first processing module is configured to segment both the small field-of-view image and the large field-of-view image based on a color or a tone to respectively obtain the at least one first image block corresponding to the small field-of-view image and the at least one second image block corresponding to the large field-of-view image.

Each first image block and each second image block has a corresponding color or tone. When the at least one first image block includes a plurality of first image blocks, the plurality of first image blocks correspond to different colors or tones. When the at least one second image block includes a plurality of second image blocks, the plurality of second image blocks correspond to different colors or tones.

The mapping relationship is that colors or tones of P first image blocks are the same as colors or tones of Q second image blocks, where P and Q are respectively integers greater than or equal to 1.

Optionally, the first processing module is further configured to paste the small field-of-view image into a first region in the large field-of-view image.

The first region is a region that is in the large field-of-view image and that corresponds to the small field-of-view image, a second region is a region other than the first region in the large field-of-view image, and the target image block is the second image block that is located in the second region and that has a mapping relationship with the at least one first image block, and a sub-image block in the second image block having a mapping relationship with the at least one first image block, where the sub-image block is located in the second region.

Optionally, the first processing module is further configured to determine, by using a watershed algorithm, a connected domain corresponding to the second image block, and is further configured to determine whether the at least one first image block is connected to a connected domain corresponding to the target image block.

If the at least one first image block is connected to the connected domain corresponding to the target image block, the first processing module is further configured to determine an image entropy of the at least one first image block.

The second processing module is further configured to determine, based on the image entropy of the at least one first image block, a manner of adding the texture information extracted from the at least one first image block to the target image block; and

add the extracted texture information to the target image block in the determined adding manner.

Optionally, the first processing module is further configured to determine a similarity or a peak signal to noise ratio between the at least one first image block and the target image block, and

determine an image entropy of the at least one first image block when the similarity or the peak signal to noise ratio meets a corresponding preset threshold.

The second processing module is further configured to determine, based on the image entropy of the at least one first image block, a manner of adding the texture information extracted from the at least one first image block to the target image block; and

add the extracted texture information to the target image block in the determined adding manner.

Optionally, the second processing module is further configured to: when the image entropy of the at least one first image block is less than an image entropy threshold, extract the texture information from the at least one first image block, and add the extracted texture information to the target image block in the explicit adding manner; and

when the image entropy of the at least one first image block is greater than or equal to the image entropy threshold, extract the texture information from the at least one first image block, and add the extracted texture information to the target image block in the implicit adding manner.

The explicit adding manner is used to indicate that the texture information is not changed when the texture information is added, and the implicit adding manner is used to indicate that the texture information is adaptively varied when the texture information is added.

For example, with reference to the image processing apparatus shown in FIG. 3, the obtaining module 210 in FIG. 15 may be implemented by the receiving interface in FIG. 3, and the processing module 220 in FIG. 15 may be implemented by at least one of the central processing unit, the graphics processing unit, the microcontroller unit, and the neural-network processing unit in FIG. 3. This is not limited in this embodiment of this application.

An embodiment of this application further provides another image processing apparatus, including a receiving interface and a processor.

The receiving interface is configured to obtain a plurality of frames of original images from an electronic device, where the plurality of frames of original images are images photographed for a same to-be-photographed scene, the plurality of frames of original images include a small field-of-view image and a large field-of-view image, and a field of view corresponding to the large field-of-view image includes a field of view corresponding to the small field-of-view image.

The processor is configured to invoke a computer program stored in a memory to perform the steps performed in the image processing method 10 described above.

An embodiment of this application further provides another electronic device, including a camera module, a processor, and a memory.

The camera module is configured to obtain a plurality of frames of original images, where the plurality of frames of original images are images photographed for a same to-be-photographed scene, the plurality of frames of original images include a small field-of-view image and a large field-of-view image, and a field of view corresponding to the large field-of-view image includes a field of view corresponding to the small field-of-view image.

The memory is configured to store a computer program that can run on the processor.

The processor is configured to perform the steps performed in the image processing method 10 described above.

Optionally, the camera module includes a first camera and a second camera. The first camera is configured to photograph the to-be-photographed scene at a first field of view, and the second camera is configured to photograph the to-be-photographed scene at a second field of view, where the first field of view is smaller than the second field of view.

The first camera is configured to obtain the small field-of-view image after the processor obtains a photographing instruction, where the field of view corresponding to the small field-of-view image is the first field of view.

The second camera is configured to obtain the large field-of-view image after the processor obtains the photographing instruction, where the field of view corresponding to the large field-of-view image is the second field of view.

Strictly, images are obtained by image processors in a color camera and a black and white camera. An image sensor may be, for example, a charge-coupled device (charge-coupled device, CCD) or a complementary metal oxide semiconductor (complementary metal oxide semiconductor, CMOS).

An embodiment of this application further provides a computer-readable storage medium. The computer-readable storage medium stores computer instructions, and when the computer-readable storage medium is run on an image processing apparatus, the image processing apparatus is enabled to perform the method shown above. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) manner or a wireless (for example, infrared, wireless, or microwave) manner. The computer-readable storage medium may be any available medium accessible by a computer or include one or more data storage devices such as a server and a data center that can be integrated with a medium. The available medium may be a magnetic medium (for example, a floppy disk, a hard disk, or a magnetic tape), an optical medium, a semiconductor medium (for example, a solid state disk (solid state disk, SSD)), or the like.

An embodiment of this application further provides a computer program product including computer instructions. When the computer program product is run on an image processing apparatus, the image processing apparatus is enabled to perform the method shown above.

FIG. 16 is a schematic diagram of a structure of a chip according to an embodiment of this application. The chip shown in FIG. 16 may be a general-purpose processor, or may be a dedicated processor. The chip includes a processor 401. The processor 401 is configured to support an image processing apparatus in performing the technical solutions shown above.

Optionally, the chip further includes a transceiver 402, and the transceiver 402 is configured to receive control of the processor 401 to support a communication apparatus in performing the technical solutions shown above.

Optionally, the chip shown in FIG. 16 may further include a storage medium 403.

It should be noted that the chip shown in FIG. 16 may be implemented by using the following circuits or devices: one or more field programmable gate arrays (field programmable gate array, FPGA), a programmable logic device (programmable logic device, PLD), a controller, a state machine, gate logic, a discrete hardware component, any other suitable circuit, or any combination of circuits that can perform various functions described in the full text of this application.

The electronic device, the image processing apparatus, the computer storage medium, the computer program product, and the chip provided in the embodiments of this application are all configured to perform the method provided above. Therefore, for beneficial effects that can be achieved by the electronic device, the image processing apparatus, the computer storage medium, the computer program product, and the chip, refer to beneficial effects corresponding to the method provided above. Details are not described herein again.

It should be understood that the foregoing is merely intended to help a person skilled in the art better understand the embodiments of this application, but not to limit the scope of the embodiments of this application. A person skilled in the art may obviously perform various equivalent modifications or changes based on the foregoing examples. For example, some steps in the foregoing embodiments of the detection method may be unnecessary, or some new steps may be added. Alternatively, any two or more of the foregoing embodiments may be combined. Such modifications, changes, or combined solutions also fall within the scope of the embodiments of this application.

It should be further understood that the foregoing descriptions of the embodiments of this application focuses on highlighting differences between the embodiments. For same or similar parts that are not mentioned, reference may be made to each other. For brevity, details are not described herein.

It should be further understood that sequence numbers of the processes do not mean execution sequences. The execution sequences of the processes should be determined based on functions and internal logic of the processes, and should not be construed as any limitation on the implementation processes of the embodiments of this application.

It should be further understood that in the embodiments of this application, "preset" or "predefined" may be implemented by pre-storing a corresponding code or table in a device (for example, including an electronic device), or implemented in a manner that can be used to indicate related information. A specific implementation of "preset" or "predefined" is not limited in this application.

It should be further understood that division of the manners, cases, categories, and embodiments in the embodiments of this application are merely for convenience of description, and should not constitute a special limitation. Various manners, categories, cases, and features in the embodiments may be combined when there is no contradiction.

It should be further understood that in the embodiments of this application, if no special description or logic conflict exists, terms and/or descriptions of different embodiments are consistent and can be mutually referenced, and technical features of different embodiments may be combined based on an internal logical relationship between the different embodiments to form a new embodiment.

Finally, it should be noted that the foregoing descriptions are merely specific implementations of this application, but are not intended to limit the protection scope of this application. Therefore, the protection scope of this application shall be subject to the protection scope of the claims.

**Claims**

1. A computer-implemented image processing method, wherein the method comprises:

   obtaining a plurality of frames of original images (S10), wherein the plurality of frames of original images are images photographed for a same to-be-photographed scene, the plurality of frames of original images comprise a small field-of-view image and a large field-of-view image, and a field of view corresponding to the large field-of-view image comprises a field of view corresponding to the small field-of-view image;
   segmenting both the small field-of-view image and the large field-of-view image to respectively obtain at least one first image block corresponding to the small field-of-view image and at least one second image block corresponding to the large field-of-view image (S20), wherein the at least one first image block and the at least one second image block have a mapping relationship; and
   extracting texture information from the at least one first image block, and adding the extracted texture information to a target image block to obtain a target image (S30), wherein the target image block is the second image block having a mapping relationship with the at least one first image block;
   **characterized in that** the segmenting both the small field-of-view image and the large field-of-view image to obtain at least one first image block corresponding to the small field-of-view image and at least one second image block corresponding to the large field-of-view image comprises:

   performing semantic segmentation on both the small field-of-view image and the large field-of-view image (S1020) by using a deep learning network model to respectively obtain at least one first image block corresponding to the small field-of-view image and at least one second image block corresponding to the large field-of-view image, wherein

   each first image block and each second image block have a corresponding category such that when the at least one first image block comprises a plurality of first image blocks, the plurality of first image blocks correspond to different categories, and when the at least one second image block comprises a plurality of second image blocks, the plurality of second image blocks correspond to different categories; and
   the mapping relationship is that categories of M first image blocks are the same as categories of N second image blocks, wherein M and N are respectively integers greater than or equal to 1, and the categories are used to represent content attributes of the first image blocks and the second image blocks.

2. The method according to claim 1, wherein the method further comprises:

   determining a similarity or a peak signal to noise ratio between the at least one first image block and the target image block (S2030);
   when the similarity or the peak signal to noise ratio meets a preset threshold corresponding to the similarity or the peak signal to noise ratio, determining an image entropy of the at least one first image block (S2040);
   determining, based on the image entropy of the at least one first image block, a manner of adding the texture information extracted from the at least one first image block to the target image block; and
   adding the extracted texture information to the target image block in the determined adding manner.

3. The method according to claim 1 or 2, wherein the deep learning network model is any one of FCN, SegNet, and DeepLab.

4. A computer-implemented image processing method, wherein the method comprises:

   obtaining a plurality of frames of original images (S10), wherein the plurality of frames of original images are images photographed for a same to-be-photographed scene, the plurality of frames of original images comprise a small field-of-view image and a large field-of-view image, and a field of view corresponding to the large field-of-view image comprises a field of view corresponding to the small field-of-view image;
   segmenting both the small field-of-view image and the large field-of-view image to respectively obtain at least one first image block corresponding to the small field-of-view image and at least one second image block corresponding to the large field-of-view image (S20), wherein the at least one first image block and the at least one second image block have a mapping relationship; and

extracting texture information from the at least one first image block and adding the extracted texture information to a target image block to obtain a target image (S30), wherein the target image block is the second image block having a mapping relationship with the at least one first image block;

**characterized in that** the segmenting both the small field-of-view image and the large field-of-view image to obtain at least one first image block corresponding to the small field-of-view image and at least one second image block corresponding to the large field-of-view image comprises:

segmenting both the small field-of-view image and the large field-of-view image based on a color or a tone to respectively obtain the at least one first image block corresponding to the small field-of-view image and the at least one second image block corresponding to the large field-of-view image (S4020), wherein

each first image block and each second image block has a corresponding color or tone, wherein when the at least one first image block comprises a plurality of first image blocks, the plurality of first image blocks correspond to different colors or tones, and when the at least one second image block comprises a plurality of second image blocks, the plurality of second image blocks correspond to different colors or tones; and

the mapping relationship is that colors or tones of P first image blocks are the same colors or tones of Q second image blocks, wherein P and Q are respectively integers greater than or equal to 1.

5. The method according to any of the preceding claims, wherein before the extracting texture information from the first image block, and adding the extracted texture information to a target image block, the method further comprises:

pasting the small field-of-view image into a first region in the large field-of-view image (S40), wherein

the first region is a region that is in the large field-of-view image and that corresponds to the small field-of-view image, a second region is a region other than the first region in the large field-of-view image, and the target image block is the second image block that is located in the second region and that has a mapping relationship with the at least one first image block.

6. The method according to claim 5, wherein before the pasting the small field-of-view image into a first region in the large field-of-view image (S40), the method further comprises:

determining, by using a watershed algorithm, a connected domain in the large field-of-view image corresponding to the at least one second image block (S50); and
after the pasting the small field-of-view image into a first region in the large field-of-view image (S40), the method further comprises:

determining whether the at least one first image block is connected to a connected domain corresponding to the target image block (S60);
if the at least one first image block is connected to the connected domain corresponding to the target image block, determining an image entropy of the at least one first image block (S70);
determining, based on the image entropy of the at least one first image block, a manner of adding the texture information extracted from the at least one first image block to the target image block; and
adding the extracted texture information to the target image block in the determined adding manner, wherein the adding manner comprises an explicit adding manner and an implicit adding manner, the explicit adding manner is used to indicate that the texture information is not changed when the texture information is added, and the implicit adding manner is used to indicate that the texture information is adaptively varied when the texture information is added, by performing one or more of rotation, scaling, or stretching to the texture information.

7. The method according to claim 6, wherein the method further comprises:

if the at least one first image block is not connected to the connected domain corresponding to the target image block, determining a similarity or a peak signal to noise ratio between the at least one first image block and the target image block (S3040);
when the similarity or the peak signal to noise ratio meets a preset threshold corresponding to the similarity or the peak signal to noise ratio, determining an image entropy of the at least one first image block (S3050);

determining, based on the image entropy of the at least one first image block, a manner of adding the texture information extracted from the at least one first image block to the target image block; and

adding the extracted texture information to the target image block in the determined adding manner, wherein the adding manner comprises the explicit adding manner and the implicit adding manner.

8. The method according to claim 6 or 7, wherein the determining, based on the image entropy of the at least one first image block, a manner of adding the texture information extracted from the at least one first image block to the target image block comprises:

when the image entropy of the at least one first image block is less than an image entropy threshold, the manner of adding the texture information extracted from the at least one first image block to the target image block is an explicit adding manner (S3060); and

when the image entropy of the at least one first image block is greater than or equal to the image entropy threshold, the manner of adding the texture information extracted from the at least one first image block to the target image block is an implicit adding manner (S3070).

9. An electronic device (100), comprising a camera module (193), a processor (110), and a memory (121), wherein

the camera module (193) is configured to obtain a plurality of frames of original images (S10), wherein the plurality of frames of original images are images photographed for a same to-be-photographed scene, the plurality of frames of original images comprise a small field-of-view image and a large field-of-view image, and a field of view corresponding to the large field-of-view image comprises a field of view corresponding to the small field-of-view image; and
the memory (121) is configured to store a computer program that can run on the processor;
**characterized in that** the processor (110) is configured to perform the steps performed in the image processing method according to any one of claims 1 to 8.

10. The electronic device (100) according to claim 9, wherein the camera module (193) comprises a first camera and a second camera, the first camera is configured to photograph the to-be-photographed scene at a first field of view, the second camera is configured to photograph the to-be-photographed scene at a second field of view, and the first field of view is smaller than the second field of view;

the first camera is configured to obtain the small field-of-view image after the processor obtains a photographing instruction, wherein the field of view corresponding to the small field-of-view image is the first field of view; and
the second camera is configured to obtain the large field-of-view image after the processor obtains the photographing instruction, wherein the field of view corresponding to the large field-of-view image is the second field of view.

11. A computer-readable storage medium, wherein the computer-readable storage medium stores a computer program, the computer program comprises program instructions;
**characterized in that** when the program instructions are executed by a processor, the processor is enabled to perform the image processing method according to any one of claims 1 to 8.

**Patentansprüche**

1. Ein computerimplementiertes Bildverarbeitungsverfahren, wobei das Verfahren Folgendes umfasst:

das Erfassen mehrerer Bilderrahmen von Originalbildern (S10), wobei die mehreren Bilderrahmen von Originalbildern Bilder sind, die von einer zu fotografierenden Szene aufgenommen wurden, die mehreren Bilderrahmen von Originalbildern ein Bild mit kleinem Sichtfeld und ein Bild mit großem Sichtfeld umfassen und das einem Bild mit großem Sichtfeld entsprechende Sichtfeld das einem Bild mit kleinem Sichtfeld entsprechende Sichtfeld umfasst;
das Segmentieren sowohl des Bildes mit kleinem Sichtfeld als auch des Bildes mit großem Sichtfeld, um jeweils mindestens einen ersten Bildblock entsprechend dem Bild mit kleinem Sichtfeld und mindestens einen zweiten Bildblock entsprechend dem Bild mit großem Sichtfeld zu erhalten (S20), wobei der mindestens eine erste Bildblock und der mindestens eine zweite Bildblock eine Abbildungsbeziehung aufweisen; und
das Extrahieren von Texturinformationen aus dem mindestens einen ersten Bildblock und das Hinzufügen der extrahierten Texturinformationen zu einem Zielbildblock, um ein Zielbild zu erhalten (S30), wobei der Zielbildblock der zweite Bildblock ist, der eine Abbildungsbeziehung mit dem mindestens einen ersten Bildblock hat;

**dadurch gekennzeichnet, dass** das Segmentieren sowohl des Bildes mit kleinem Sichtfeld als auch des Bildes mit großem Sichtfeld, um mindestens einen ersten Bildblock entsprechend dem Bild mit kleinem Sichtfeld und mindestens einen zweiten Bildblock entsprechend dem Bild mit großem Sichtfeld zu erhalten, Folgendes umfasst:

die Durchführung der semantischen Segmentierung sowohl des Bildes mit kleinem Sichtfeld als auch des Bildes mit großem Sichtfeld (S1020) unter Verwendung eines Deep-Learning-Netzwerkmodells, um jeweils mindestens einen ersten Bildblock entsprechend dem Bild mit kleinem Sichtfeld und mindestens einen zweiten Bildblock entsprechend dem Bild mit großem Sichtfeld zu erhalten, wobei

jeder erste Bildblock und jeder zweite Bildblock eine entsprechende Kategorie haben, so dass, wenn der mindestens eine erste Bildblock eine Vielzahl von ersten Bildblöcken umfasst, die Vielzahl von ersten Bildblöcken unterschiedlichen Kategorien entsprechen, und wenn der mindestens eine zweite Bildblock eine Vielzahl von zweiten Bildblöcken umfasst, die Vielzahl von zweiten Bildblöcken unterschiedlichen Kategorien entsprechen; und

die Abbildungsbeziehung darin besteht, dass die Kategorien von M ersten Bildblöcken mit den Kategorien von N zweiten Bildblöcken übereinstimmen, wobei M und N j eweils ganze Zahlen größer oder gleich 1 sind und die Kategorien verwendet werden, um Inhaltsattribute der ersten Bildblöcke und der zweiten Bildblöcke darzustellen.

2. Verfahren nach Anspruch 1, wobei das Verfahren ferner Folgendes umfasst:

Bestimmen einer Ähnlichkeit oder eines Spitzen-Signal-Rausch-Verhältnisses zwischen mindestens einem ersten Bildblock und dem Zielbildblock (S2030);
Wenn die Ähnlichkeit oder das Spitzen-Signal-Rausch-Verhältnis einen voreingestellten Schwellenwert erfüllt, der der Ähnlichkeit oder dem Spitzen-Signal-Rausch-Verhältnis entspricht, wird eine Bildentropie des mindestens einen ersten Bildblocks bestimmt (S2040);
Bestimmen einer Methode zum Hinzufügen der aus dem mindestens einen ersten Bildblock extrahierten Texturinformation zum Zielbildblock basierend auf der Bildentropie des mindestens einen ersten Bildblocks; und

Hinzufügen der extrahierten Texturinformation zum Zielbildblock auf die festgelegte Weise.

3. Verfahren nach Anspruch 1 oder 2, wobei das Deep-Learning-Netzwerkmodell eines der folgenden ist: FCN, SegNet oder DeepLab.

4. Ein computerimplementiertes Bildverarbeitungsverfahren, wobei das Verfahren Folgendes umfasst:

Erfassen mehrerer Bilderrahmen von Originalbildern (S10), wobei die mehreren Bilderrahmen von Originalbildern Bilder einer identischen, zu fotografierenden Szene sind, die mehreren Bilderrahmen von Originalbildern ein Bild mit kleinem Sichtfeld und ein Bild mit großem Sichtfeld umfassen und das einem Bild mit großem Sichtfeld zugehörige Sichtfeld das dem Bild mit kleinem Sichtfeld zugehörige Sichtfeld einschließt;
Segmentieren sowohl des Bildes mit kleinem Sichtfeld als auch des Bildes mit großem Sichtfeld, um jeweils mindestens einen ersten Bildblock entsprechend dem Bild mit kleinem Sichtfeld und mindestens einen zweiten Bildblock entsprechend dem Bild mit großem Sichtfeld zu erhalten (S20), wobei zwischen dem mindestens einen ersten Bildblock und dem mindestens einen zweiten Bildblock eine Zuordnungsbeziehung besteht; und
Extrahieren von Texturinformationen aus dem mindestens einen ersten Bildblock und Hinzufügen der extrahierten Texturinformation zu einem Zielbildblock, um ein Zielbild zu erhalten (S30), wobei der Zielbildblock der zweite Bildblock ist, der eine Zuordnungsbeziehung mit dem mindestens einen ersten Bildblock hat;
**Dadurch gekennzeichnet, dass** das Segmentieren sowohl des Bildes mit kleinem Sichtfeld als auch des Bildes mit großem Sichtfeld zum Erhalten mindestens eines ersten Bildblocks entsprechend dem Bild mit kleinem Sichtfeld und mindestens eines zweiten Bildblocks entsprechend dem Bild mit großem Sichtfeld Folgendes umfasst:

Segmentieren sowohl des Bildes mit kleinem Sichtfeld als auch des Bildes mit großem Sichtfeld basierend auf einer Farbe oder einem Ton, um jeweils mindestens einen ersten Bildblock entsprechend dem Bild mit kleinem Sichtfeld und mindestens einen zweiten Bildblock entsprechend dem Bild mit großem Sichtfeld zu erhalten (S4020), wobei
Jeder erste Bildblock und jeder zweite Bildblock hat eine entsprechende Farbe oder einen entsprechenden Farbton, wobei, wenn der mindestens eine erste Bildblock mehrere erste Bildblöcke umfasst, die mehreren ersten Bildblöcke unterschiedlichen Farben oder Farbtönen entsprechen und, wenn der mindestens eine zweite Bildblock mehrere zweite Bildblöcke umfasst, die mehreren zweiten Bildblöcke unterschiedlichen Farben oder Farbtönen entsprechen; und

Die Zuordnungsbeziehung besteht darin, dass die Farben oder Farbtöne von P ersten Bildblöcken die gleichen Farben oder Farbtöne wie bei Q zweiten Bildblöcken sind, wobei P und Q jeweils ganze Zahlen größer oder gleich 1 sind.

5. Verfahren nach einem der vorhergehenden Ansprüche, wobei vor dem Extrahieren der Texturinformation aus dem ersten Bildblock und dem Hinzufügen der extrahierten Texturinformation zu einem Zielbildblock das Verfahren weiterhin Folgendes umfasst:

Das Einfügen des Bildes mit kleinem Sichtfeld in einen ersten Bereich im Bild mit großem Sichtfeld (S40), wobei

der erste Bereich ein Bereich ist, der sich im Bild mit großem Sichtfeld befindet und dem Bild mit kleinem Sichtfeld entspricht, ein zweiter Bereich ist ein anderer Bereich als der erste Bereich im Bild mit großem Sichtfeld, und der Zielbildblock ist der zweite Bildblock, der sich im zweiten Bereich befindet und eine Zuordnungsbeziehung zu dem mindestens einen ersten Bildblock hat.

6. Verfahren nach Anspruch 5, wobei vor dem Einfügen des Bildes mit kleinem Sichtfeld in einen ersten Bereich im Bild mit großem Sichtfeld (S40) das Verfahren weiterhin Folgendes umfasst:

Bestimmen einer zusammenhängenden Domäne im Bild mit großem Sichtfeld, die dem mindestens einen zweiten Bildblock entspricht, mithilfe eines Watershed-Algorithmus (S50); und Nach dem Einfügen des Bildes mit kleinem Sichtfeld in einen ersten Bereich im Bild mit großem Sichtfeld (S40) umfasst das Verfahren weiterhin:

Bestimmen, ob der mindestens eine erste Bildblock mit einer zusammenhängenden Domäne verbunden ist, die dem Zielbildblock entspricht (S60); Wenn der mindestens eine erste Bildblock mit der zusammenhängenden Domäne verbunden ist, die dem Zielbildblock entspricht, Bestimmen einer Bildentropie des mindestens einen ersten Bildblocks (S70); Bestimmen einer Art und Weise, wie die aus dem mindestens einen ersten Bildblock extrahierten Texturinformationen basierend auf der Bildentropie des mindestens einen ersten Bildblocks zu dem Zielbildblock hinzugefügt werden; und Das Hinzufügen der extrahierten Texturinformation zu dem Zielbildblock auf die bestimmte Hinzufügungsart, wobei die Hinzufügungsart eine explizite Hinzufügungsart und eine implizite Hinzufügungsart umfasst, wobei die explizite Hinzufügungsart angibt, dass die Texturinformation beim Hinzufügen nicht verändert wird, und die implizite Hinzufügungsart angibt, dass die Texturinformation beim Hinzufügen adaptiv verändert wird, indem eine oder mehrere der Operationen Drehen, Skalieren oder Strecken auf die Texturinformation angewendet werden.

7. Verfahren nach Anspruch 6, wobei das Verfahren weiterhin umfasst:

Wenn der mindestens eine erste Bildblock nicht mit der dem Zielbildblock entsprechenden zusammenhängenden Domäne verbunden ist, wird eine Ähnlichkeit oder ein Spitzen-Signal-Rausch-Verhältnis (PSNR) zwischen dem mindestens einen ersten Bildblock und dem Zielbildblock bestimmt (S3040); Wenn die Ähnlichkeit oder das Spitzen-Signal-Rausch-Verhältnis einen voreingestellten Schwellenwert erreicht, der der Ähnlichkeit oder dem Spitzen-Signal-Rausch-Verhältnis entspricht, wird eine Bildentropie des mindestens einen ersten Bildblocks bestimmt (S3050); Bestimmen einer Art des Hinzufügens der aus dem mindestens einen ersten Bildblock extrahierten Texturinformation zu dem Zielbildblock basierend auf der Bildentropie des mindestens einen ersten Bildblocks; und Hinzufügen der extrahierten Texturinformation zu dem Zielbildblock in der bestimmten Hinzufügungsart, wobei die Hinzufügungsart die explizite Hinzufügungsart und die implizite Hinzufügungsart umfasst.

8. Verfahren nach Anspruch 6 oder 7, wobei das Bestimmen einer Art des Hinzufügens der aus dem mindestens einen ersten Bildblock extrahierten Texturinformation zu dem Zielbildblock basierend auf der Bildentropie des mindestens einen ersten Bildblocks Folgendes umfasst:

Wenn die Bildentropie des mindestens einen ersten Bildblocks kleiner als ein Bildentropie-Schwellenwert ist, ist die Art des Hinzufügens der aus dem mindestens einen ersten Bildblock extrahierten Texturinformation zu dem Zielbildblock eine explizite Hinzufügungsart (S3060); und

Wenn die Bildentropie des mindestens einen ersten Bildblocks größer oder gleich dem Bildentropie-Schwellenwert ist, ist die Art des Hinzufügens der aus dem mindestens einen ersten Bildblock extrahierten Texturinformation zu dem Zielbildblock eine implizite Hinzufügungsart (S3070).

9. Elektronisches Gerät (100), umfassend ein Kameramodul (193), einen Prozessor (110) und einen Speicher (121), wobei

Das Kameramodul (193) ist so konfiguriert, dass es eine Mehrzahl von Einzelbildern (S10) der Originalbilder aufnimmt, wobei die Mehrzahl von Einzelbildern Originalbilder sind, die für dieselbe aufzunehmende Szene fotografiert werden. Die Mehrzahl von Einzelbildern der Originalbilder umfasst ein Bild mit kleinem Sichtfeld und ein Bild mit großem Sichtfeld, und das zum großen Sichtfeldbild gehörende Sichtfeld umfasst das zum kleinen Sichtfeldbild gehörende Sichtfeld; und

Der Speicher (121) ist so konfiguriert, ein Computerprogramm zu speichern, das auf dem Prozessor ausgeführt werden kann;

**Dadurch gekennzeichnet, dass** der Prozessor (110) so konfiguriert ist, die in dem Bildverarbeitungsverfahren gemäß einem der Ansprüche 1 bis 8 beschriebenen Schritte auszuführen.

10. Elektronisches Gerät (100) nach Anspruch 9, wobei das Kameramodul (193) eine erste Kamera und eine zweite Kamera umfasst. Die erste Kamera ist dafür konfiguriert, die aufzunehmende Szene mit einem ersten Sichtfeld aufzunehmen, die zweite Kamera ist dafür konfiguriert, die aufzunehmende Szene mit einem zweiten Sichtfeld aufzunehmen, und das erste Sichtfeld ist kleiner als das zweite Sichtfeld;

Die erste Kamera ist dafür konfiguriert, das Bild mit kleinem Sichtfeld aufzunehmen, nachdem der Prozessor eine Aufnahmeanweisung erhalten hat, wobei das dem Bild mit kleinem Sichtfeld entsprechende Sichtfeld das erste Sichtfeld ist; und

Die zweite Kamera ist dafür konfiguriert, das Bild mit großem Sichtfeld aufzunehmen, nachdem der Prozessor die Aufnahmeanweisung erhalten hat, wobei das dem Bild mit großem Sichtfeld entsprechende Sichtfeld das zweite Sichtfeld ist.

11. Ein computerlesbares Speichermedium, wobei das computerlesbare Speichermedium ein Computerprogramm speichert und das Computerprogramm Programm-Anweisungen umfasst;

**Dadurch gekennzeichnet, dass**, wenn die Programmanweisungen von einem Prozessor ausgeführt werden, der Prozessor in der Lage ist, das Bildverarbeitungsverfahren gemäß einem der Ansprüche 1 bis 8 auszuführen.

## Revendications

1. Procédé de traitement d'image mis en œuvre par ordinateur, ledit procédé comprenant :

l'obtention d'une pluralité d'images originales (S10), la pluralité d'images originales étant des images photographiées pour une même scène à photographier, ladite pluralité comprenant une image à petit champ de vision et une image à grand champ de vision, et le champ de vision correspondant à l'image à grand champ de vision comprenant le champ de vision correspondant à l'image à petit champ de vision ;

la segmentation à la fois de l'image à petit champ de vision et de l'image à grand champ de vision pour obtenir respectivement au moins un premier bloc d'image correspondant à l'image à petit champ de vision et au moins un second bloc d'image correspondant à l'image à grand champ de vision (S20), lesdits au moins un premier bloc d'image et au moins un second bloc d'image ayant une relation de correspondance ; et

l'extraction d'informations de texture à partir du ou des premier(s) bloc(s) d'image, et l'ajout des informations de texture extraites à un bloc d'image cible pour obtenir une image cible (S30), le bloc d'image cible étant le second bloc d'image ayant une relation de correspondance avec le ou les premier(s) bloc(s) d'image ;

**caractérisé en ce que** la segmentation à la fois de l'image à petit champ de vision et de l'image à grand champ de vision pour obtenir au moins un premier bloc d'image correspondant à l'image à petit champ de vision et au moins un second bloc d'image correspondant à l'image à grand champ de vision comprend :

la réalisation d'une segmentation sémantique sur l'image à petit champ de vision et l'image à grand champ de vision (S1020) à l'aide d'un modèle de réseau de deep learning pour obtenir respectivement au moins un premier bloc d'image correspondant à l'image à petit champ de vision et au moins un second bloc d'image correspondant à l'image à grand champ de vision, dans lequel

chaque premier bloc d'image et chaque second bloc d'image ont une catégorie correspondante telle que, lorsque le ou les premier(s) bloc(s) d'image comprennent une pluralité de premiers blocs d'image, la pluralité de premiers blocs d'image correspond à différentes catégories, et lorsque le ou les second(s) bloc(s) d'image comprennent une pluralité de seconds blocs d'image, la pluralité de seconds blocs d'image correspond à différentes catégories ; et

la relation de correspondance est telle que les catégories de M premiers blocs d'image sont les mêmes que les catégories de N seconds blocs d'image, où M et N sont respectivement des entiers supérieurs ou égaux à 1, et les catégories servent à représenter les attributs de contenu des premiers blocs d'image et des seconds blocs d'image.

2. Procédé selon la revendication 1, dans lequel le procédé comprend en outre :

déterminer une similarité ou un rapport signal sur bruit de crête entre le ou les premiers blocs d'image et le bloc d'image cible (S2030) ;
lorsque la similarité ou le rapport signal sur bruit de crête atteint un seuil prédéfini correspondant à la similarité ou au rapport signal sur bruit de crête, déterminer une entropie d'image du ou des premiers blocs d'image (S2040) ;
déterminer, sur la base de l'entropie d'image du ou des premiers blocs d'image, une manière d'ajouter les informations de texture extraites du ou des premiers blocs d'image au bloc d'image cible ; et
ajouter les informations de texture extraites au bloc d'image cible selon la manière d'ajout déterminée.

3. Le procédé selon la revendication 1 ou 2, dans lequel le modèle de réseau d'apprentissage profond est l'un des modèles suivants : FCN, SegNet ou DeepLab.

4. Un procédé de traitement d'image mis en œuvre par ordinateur, ledit procédé comprenant :

obtenir une pluralité d'images originales (S10), la pluralité d'images originales étant des images photographiées pour une même scène à photographier, la pluralité d'images originales comprenant une image à petit champ de vision et une image à grand champ de vision, et le champ de vision correspondant à l'image à grand champ de vision comprenant le champ de vision correspondant à l'image à petit champ de vision ;

segmenter à la fois l'image à petit champ de vision et l'image à grand champ de vision afin d'obtenir respectivement au moins un premier bloc d'image correspondant à l'image à petit champ de vision et au moins un second bloc d'image correspondant à l'image à grand champ de vision (S20), le ou les premiers blocs d'image et le ou les seconds blocs d'image ayant une relation de correspondance ; et

extraire des informations de texture du ou des premiers blocs d'image et ajouter les informations de texture extraites à un bloc d'image cible pour obtenir une image cible (S30), le bloc d'image cible étant le second bloc d'image ayant une relation de correspondance avec le ou les premiers blocs d'image ;

**caractérisé en ce que** le fait de segmenter à la fois l'image à petit champ de vision et l'image à grand champ de vision afin d'obtenir au moins un premier bloc d'image correspondant à l'image à petit champ de vision et au moins un second bloc d'image correspondant à l'image à grand champ de vision comprend :

segmenter à la fois l'image à petit champ de vision et l'image à grand champ de vision sur la base d'une couleur ou d'une tonalité afin d'obtenir respectivement le ou les premiers blocs d'image correspondant à l'image à petit champ de vision et le ou les seconds blocs d'image correspondant à l'image à grand champ de vision (S4020), où

chaque premier bloc d'image et chaque second bloc d'image possède une couleur ou une tonalité correspondante, où, lorsque le ou les premiers blocs d'image comprennent une pluralité de premiers blocs d'image, ces derniers correspondent à différentes couleurs ou tonalités, et lorsque le ou les seconds blocs d'image comprennent une pluralité de seconds blocs d'image, ces derniers correspondent à différentes couleurs ou tonalités ; et

la relation de correspondance est telle que les couleurs ou tonalités des P premiers blocs d'image sont les mêmes que les couleurs ou tonalités des Q seconds blocs d'image, où P et Q sont respectivement des entiers supérieurs ou égaux à 1.

5. Le procédé selon l'une quelconque des revendications précédentes, dans lequel, avant d'extraire les informations de texture à partir du premier bloc d'image et d'ajouter les informations de texture extraites à un bloc d'image cible, le procédé comprend en outre :

coller la petite image à champ de vision dans une première région de la grande image à champ de vision (S40), dans laquelle la première région est une région qui se trouve dans la grande image à champ de vision et qui correspond à la petite image à champ de vision, une deuxième région étant une région autre que la première région dans la grande image à champ de vision, et le bloc d'image cible étant le second bloc d'image situé dans la deuxième région et ayant une relation de correspondance avec le ou les premiers blocs d'image.

6. Le procédé selon la revendication 5, dans lequel, avant de coller la petite image à champ de vision dans une première région de la grande image à champ de vision (S40), le procédé comprend en outre :

déterminer, à l'aide d'un algorithme de segmentation par bassin versant, un domaine connexe dans la grande image à champ de vision correspondant au(x) second(s) bloc(s) d'image (S50) ; et
après avoir collé la petite image à champ de vision dans une première région de la grande image à champ de vision (S40), le procédé comprend en outre :

déterminer si le ou les premiers blocs d'image sont connectés à un domaine connexe correspondant au bloc d'image cible (S60) ;
si le ou les premiers blocs d'image sont connectés au domaine connexe correspondant au bloc d'image cible, déterminer une entropie d'image du ou des premiers blocs d'image (S70) ;
déterminer, sur la base de l'entropie d'image du ou des premiers blocs d'image, une manière d'ajouter les informations de texture extraites du ou des premiers blocs d'image au bloc d'image cible ; et
ajouter les informations de texture extraites au bloc d'image cible selon la manière d'ajout déterminée, la manière d'ajout comprenant une manière d'ajout explicite et une manière d'ajout implicite, la manière d'ajout explicite étant utilisée pour indiquer que les informations de texture ne sont pas modifiées lors de l'ajout des informations de texture, et la manière d'ajout implicite étant utilisée pour indiquer que les informations de texture sont adaptées de façon variable lors de l'ajout des informations de texture, en effectuant une ou plusieurs opérations de rotation, mise à l'échelle ou étirement sur les informations de texture.

7. Le procédé selon la revendication 6, dans lequel le procédé comprend en outre :

si le ou les blocs d'image premiers ne sont pas connectés au domaine connecté correspondant au bloc d'image cible, déterminer une similarité ou un rapport signal sur bruit de crête (PSNR) entre le ou les blocs d'image premiers et le bloc d'image cible (S3040) ;
lorsque la similarité ou le rapport signal sur bruit de crête atteint un seuil prédéfini correspondant à la similarité ou au rapport signal sur bruit de crête, déterminer une entropie d'image du ou des blocs d'image premiers (S3050) ;
déterminer, sur la base de l'entropie d'image du ou des blocs d'image premiers, une manière d'ajouter les informations de texture extraites du ou des blocs d'image premiers au bloc d'image cible ; et
ajouter les informations de texture extraites au bloc d'image cible selon la manière d'ajout déterminée, la manière d'ajout comprenant la manière d'ajout explicite et la manière d'ajout implicite.

8. Le procédé selon la revendication 6 ou 7, dans lequel la détermination, sur la base de l'entropie d'image du ou des blocs d'image premiers, d'une manière d'ajouter les informations de texture extraites du ou des blocs d'image premiers au bloc d'image cible comprend :

lorsque l'entropie d'image du ou des blocs d'image premiers est inférieure à un seuil d'entropie d'image, la manière d'ajouter les informations de texture extraites du ou des blocs d'image premiers au bloc d'image cible est une manière d'ajout explicite (S3060) ; et
lorsque l'entropie d'image du ou des blocs d'image premiers est supérieure ou égale au seuil d'entropie d'image, la manière d'ajouter les informations de texture extraites du ou des blocs d'image premiers au bloc d'image cible est une manière d'ajout implicite (S3070).

9. Un dispositif électronique (100), comprenant un module de caméra (193), un processeur (110) et une mémoire (121), dans lequel

le module caméra (193) est configuré pour obtenir une pluralité de trames d'images originales (S10), où la pluralité de trames d'images originales sont des images photographiées pour une même scène à photographier, la pluralité de trames d'images originales comprenant une image à petite champ de vision et une image à grand champ de vision, et le champ de vision correspondant à l'image à grand champ de vision comprend le champ de vision correspondant à l'image à petite champ de vision ; et la mémoire (121) est configurée pour stocker un programme informatique pouvant s'exécuter sur le processeur ;

**caractérisé en ce que** le processeur (110) est configuré pour exécuter les étapes réalisées dans le procédé de traitement d'image selon l'une quelconque des revendications 1 à 8.

10. Le dispositif électronique (100) selon la revendication 9, dans lequel le module caméra (193) comprend une première caméra et une seconde caméra, la première caméra étant configurée pour photographier la scène à photographier à un premier champ de vision, la seconde caméra étant configurée pour photographier la scène à photographier à un second champ de vision, et le premier champ de vision étant plus petit que le second champ de vision ;

la première caméra est configurée pour obtenir l'image à petite champ de vision après que le processeur ait reçu une instruction de prise de vue, le champ de vision correspondant à l'image à petite champ de vision étant le premier champ de vision ; et la seconde caméra est configurée pour obtenir l'image à grand champ de vision après que le processeur ait reçu l'instruction de prise de vue, le champ de vision correspondant à l'image à grand champ de vision étant le second champ de vision.

11. Un support de stockage lisible par ordinateur, dans lequel le support de stockage lisible par ordinateur stocke un programme informatique, le programme informatique comprenant des instructions de programme ;

**caractérisé en ce que**, lorsque les instructions de programme sont exécutées par un processeur, le processeur est apte à exécuter le procédé de traitement d'image selon l'une quelconque des revendications 1 à 8.

FIG. 1

Electronic device 100

| Mobile communication module 2G/3G/4G/5G [150] | Wireless communication module BT/WLAN/GNSS/NFC/IR/FM [160] |

Antenna 1

Antenna 2

| Speaker [170A] | | |
| Telephone receiver [170B] | Audio module [170] | Processor [110] |
| Microphone [170C] | | |
| Headset jack [170D] | | |

Displays 1~N [194]

Cameras 1~N [193]

Indicator [192]

Motor [191]

Button [190]

Internal memory [121]

SIM card interfaces 1~N [195]

External memory interface [120]

USB interface [130]

Charging input

Charging management module [140]

Power management module [141]

Battery [142]

Sensor module [180]

Pressure sensor [180A]

Gyroscope sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

FIG. 2

FIG. 3

10

Obtain a plurality of frames of original images    S10

↓

Segment both a small field-of-view image and a large field-of-view image to respectively obtain at least one first image block corresponding to the small field-of-view image and at least one second image block corresponding to the large field-of-view image    S20

↓

Extract texture information from the at least one first image block, and add the extracted texture information to a target image block to obtain a target image    S30

FIG. 4

10

| |
|---|
| Obtain a plurality of frames of original images |

S10

| |
|---|
| Segment both a small field-of-view image and a large field-of-view image to respectively obtain at least one first image block corresponding to the small field-of-view image and at least one second image block corresponding to the large field-of-view image |

S20

| |
|---|
| Paste the small field-of-view image into a first region in the large field-of-view image |

S40

| |
|---|
| Extract texture information from the at least one first image block, and add the extracted texture information to a target image block to obtain a target image |

S30

FIG. 5

FIG. 6

10

| Obtain a plurality of frames of original images | S10 |

↓

| Segment both a small field-of-view image and a large field-of-view image to respectively obtain at least one first image block corresponding to the small field-of-view image and at least one second image block corresponding to the large field-of-view image | S20 |

↓

| Determine, by using a watershed algorithm, a connected domain corresponding to the at least one second image block | S50 |

↓

| Paste the small field-of-view image into a first region in the large field-of-view image | S40 |

↓

| Extract texture information from the at least one first image block, and add the extracted texture information to a target image block to obtain a target image | S30 |

FIG. 7

(a)

(b)

FIG. 8

10

Obtain a plurality of frames of original images — S10

Segment both a small field-of-view image and a large field-of-view image to respectively obtain at least one first image block corresponding to the small field-of-view image and at least one second image block corresponding to the large field-of-view image — S20

Determine, by using a watershed algorithm, a connected domain corresponding to the at least one second image block — S50

Paste the small field-of-view image into a first region in the large field-of-view image — S40

Determine whether the at least one first image block is connected to a connected domain corresponding to a target image block — S60

If the at least one first image block is connected to the connected domain corresponding to the target image block, determine an image entropy of the at least one first image block — S70

Extract texture information from the at least one first image block, and add the extracted texture information to the target image block to obtain a target image — S30

FIG. 9

Small field-of-view image

Large field-of-view image

S1010

Semantic segmentation

Semantic segmentation

S1020

x1    x2  x3  x4

First image block

y1    y2  y3  y4   y5 y6

Second image block

Extract texture information from each first image block, and add the extracted texture information to a target image block to obtain a target image

S1030

FIG. 10

Small field-of-view image

Large field-of-view image

S2010

Semantic segmentation

Semantic segmentation

S2020

x1    x2 x3 x4

y1    y2 y3 y4 y5 y6

First image block

Second image block

Determine a similarity or a peak signal to noise ratio between each first image block and a target image block — S2030

When the similarity or the peak signal to noise ratio meets a corresponding preset threshold, determine an image entropy of the corresponding first image block — S2040

S2050

When the image entropy of the first image block is less than an image entropy threshold, extract texture information from the first image block, and add the extracted texture information to the target image block in an explicit adding manner

S2060

When the image entropy of the first image block is greater than or equal to the image entropy threshold, extract the texture information from the first image block, and add the extracted texture information to the target image block in an implicit adding manner

Obtain a target image — S2070

FIG. 11

FIG. 12

S4010

S4020

S4030

FIG. 13A

CONT.
FROM
FIG. 13A

CONT.
FROM
FIG. 13A

Paste the small field-of-view image into a first region in the large field-of-view image — S4040

Determine whether each first image block is connected to a connected domain corresponding to a target image block — S4050

If the first image block is connected to the connected domain corresponding to the target image block, determine an image entropy of the first image block — S4060

— S4070

When the image entropy of the first image block is less than an image entropy threshold, extract texture information from the first image block, and add the extracted texture information to the target image block in an explicit adding manner

— S4080

When the image entropy of the first image block is greater than or equal to the image entropy threshold, extract the texture information from the first image block, and add the extracted texture information to the target image block in an implicit adding manner

Obtain a target image — S4090

FIG. 13B

FIG. 14A

CONT.
FROM
FIG. 14A

CONT.
FROM
FIG. 14A

Paste the small field-of-view image into a first region in the large field-of-view image — S5040

Determine whether each first image block is connected to a connected domain corresponding to a target image block — S5050

If the first image block is connected to the connected domain corresponding to the target image block, determine an image entropy of the first image block — S5060

S5090

If the first image block is not connected to the connected domain corresponding to the target image block, determine a similarity or a peak signal to noise ratio between the first image block and the target image block, and determine the image entropy of the first image block when the similarity or the peak signal to noise ratio meets a corresponding preset threshold

S5070

When the image entropy of the first image block is less than an image entropy threshold, extract texture information from the first image block, and add the extracted texture information to the target image block in an explicit adding manner

S5080

When the image entropy of the first image block is greater than or equal to the image entropy threshold, extract the texture information from the first image block, and add the extracted texture information to the target image block in an implicit adding manner

Obtain a target image — S5100

FIG. 14B

FIG. 15

FIG. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110707978
- CN 108401104